# EUROPEAN PATENT APPLICATION

(11) **EP 4 727 228 A1**
(43) Date of publication of application: **15.04.2026**
(21) Application number: 23940986.5
(22) Date of filing: 12.06.2023
(51) Int. Cl.: H04W 64/00

(54) **RANGING OR POSITIONING METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); SHEN, Yang, Beijing 100085 (CN); LU, Wei, Beijing 100085 (CN)
(74) Representative: Stöckeler, Ferdinand
(86) International application number: PCT/CN2023/099770
(87) International publication number: WO 2024/254748

(57) **Abstract**

The present invention provides a ranging or positioning method and apparatus, a communication device, a communication system, and a storage medium. The method comprises: a first network element may transmit group discovery information to a first terminal, wherein the group discovery information is used for indicating that a second terminal belongs to a first terminal group, and the second terminal is used for performing ranging or positioning on the first terminal. According to the method of the present invention, a first network element may timely indicate group discovery information to a first terminal, thereby implementing ranging or positioning on the first terminal on the basis of a second terminal in a first terminal group.

## Description

### FIELD

The present disclosure relates to the field of communication technologies, and more particularly to a ranging or positioning method, a ranging or positioning apparatus, a communication device, a communication system, and a storage medium.

### BACKGROUND

To support a direct communication between terminals, a sidelink (SL) communication method is introduced. A terminal may communicate with a base station through a relay function of another terminal. Ranging refers to determining a distance between two or more terminals, or a direction from a terminal to another terminal, via a PC5 interface. The PC5 interface refers to a communication interface between terminals. Positioning refers to estimating a location of a terminal being positioned.

### SUMMARY

Embodiments of the present disclosure provide a ranging or positioning method, a ranging or positioning apparatus, a device, a chip system, a storage medium, a computer program, and a computer program product, which may be applied in the field of communication technologies to solve the technical problem of "not supporting ranging or positioning of a first terminal based on a second terminal within a designated terminal group".

The present disclosure proposes a ranging or positioning method, a ranging or positioning apparatus, a communication device, a communication system, and a storage medium.

According to a first aspect of the embodiments of the present disclosure, a ranging or positioning method is provided, and the ranging or positioning method includes: transmitting group discovery information to a first terminal, where the group discovery information indicates that a second terminal belongs to a first terminal group, and the second terminal is used for ranging or positioning of the first terminal.

According to a second aspect of the embodiments of the present disclosure, a ranging or positioning method is provided, and the ranging or positioning method includes: receiving group discovery information transmitted by a first network element, where the group discovery information indicates that a second terminal belongs to a first terminal group, and the second terminal is used for ranging or positioning of a first terminal.

According to a third aspect of the embodiments of the present disclosure, a ranging or positioning method is provided, and the ranging or positioning method includes: receiving group discovery information transmitted by a third network element and/or a location service client, where the group discovery information indicates that a second terminal belongs to a first terminal group, and the second terminal is used for ranging or positioning of a first terminal.

According to a fourth aspect of the embodiments of the present disclosure, a ranging or positioning method is provided, and the ranging or positioning method includes: transmitting group discovery information to a second network element, where the group discovery information indicates that a second terminal belongs to a first terminal group, and the second terminal is used for ranging or positioning of a first terminal.

According to a fifth aspect of the embodiments of the present disclosure, a ranging or positioning method is provided for a communication system. The communication system includes a first network element, a first terminal, a second network element, and a third network element and/or a location service client. The method includes: the first network element transmitting group discovery information to the first terminal, where the group discovery information indicates that a second terminal belongs to a first terminal group, and the second terminal is used for ranging or positioning of the first terminal; the first terminal receiving the group discovery information transmitted by the first network element, where the group discovery information indicates that the second terminal belongs to the first terminal group, and the second terminal is used for ranging or positioning of the first terminal; the second network element receiving the group discovery information transmitted by the third network element and/or the location service client, where the group discovery information indicates that the second terminal belongs to the first terminal group, and the second terminal is used for ranging or positioning of the first terminal; and the third network element and/or the location service client transmitting the group discovery information to the second network element, where the group discovery information indicates that the second terminal belongs to the first terminal group, and the second terminal is used for ranging or positioning of the first terminal.

According to a sixth aspect of the embodiments of the present disclosure, a ranging or positioning method is provided, and the ranging or positioning apparatus includes a transceiver module configured to: transmit group discovery information to a first terminal, where the group discovery information indicates that a second terminal belongs to a first terminal group, and the second terminal is used for ranging or positioning of the first terminal; or receive group discovery information transmitted by a first network element, where the group discovery information indicates that a second terminal belongs to a first terminal group, and the second terminal is used for ranging or positioning of a first terminal; or receive group discovery information transmitted by a third network element and/or a location service client, where the group discovery information indicates that a second terminal belongs to a first terminal group, and the second terminal is used for ranging or positioning of a first terminal; or transmit group discovery information to a second network element, where the group discovery information indicates that a second terminal belongs to a first terminal group, and the second terminal is used for ranging or positioning of a first terminal.

According to a seventh aspect of the embodiments of the present disclosure, a communication device is provided, and the communication device includes one or more processors. The one or more processors are configured to call instructions to cause the communication device to perform the ranging or positioning method according to any one of the first aspect, the second aspect, the third aspect, or the fourth aspect.

According to an eighth aspect of the embodiments of the present disclosure, a communication system is proposed, and the communication system includes a first network element, a first terminal, a second network element, and a third network element and/or a location service client. The first network element is configured to perform the ranging or positioning method according to the first aspect; the first terminal is configured to perform the ranging or positioning method according to the second aspect; the second network element is configured to perform the ranging or positioning method according to the third aspect; and the third network element and/or the location service client is configured to perform the ranging or positioning method according to the fourth aspect.

According to a ninth aspect of the embodiments of the present disclosure, a storage medium is proposed. The storage medium stores instructions, and the instructions, when run on a communication device, are configured to cause the communication device to perform the ranging or positioning method according to any one of the first aspect, the second aspect, the third aspect, or the fourth aspect.

### BRIEF DESCRIPTION OF THE DRAWINGS

To illustrate the technical solutions in embodiments of the present disclosure or the technical solutions in the related art more clearly, the following will briefly illustrate the accompanying drawings required for describing the embodiments of the present disclosure or the related art.
FIG. 1 is a schematic architectural diagram of a communication system according to an embodiment of the present disclosure.
FIG. 2a is a schematic interaction diagram of a ranging or positioning method according to an embodiment of the present disclosure.
FIG. 2b is a schematic interaction diagram of a ranging or positioning method according to an embodiment of the present disclosure.
FIG. 3a is a schematic flowchart of a ranging or positioning method according to an embodiment of the present disclosure.
FIG. 3b is a schematic flowchart of a ranging or positioning method according to an embodiment of the present disclosure.
FIG. 3c is a schematic flowchart of a ranging or positioning method according to an embodiment of the present disclosure.
FIG. 4a is a schematic flowchart of a ranging or positioning method according to an embodiment of the present disclosure.
FIG. 4b is a schematic flowchart of a ranging or positioning method according to an embodiment of the present disclosure.
FIG. 4c is a schematic flowchart of a ranging or positioning method according to an embodiment of the present disclosure.
FIG. 5a is a schematic flowchart of a ranging or positioning method according to an embodiment of the present disclosure.
FIG. 5b is a schematic flowchart of a ranging or positioning method according to an embodiment of the present disclosure.
FIG. 6a is a schematic flowchart of a ranging or positioning method according to an embodiment of the present disclosure.
FIG. 6b is a schematic flowchart of a ranging or positioning method according to an embodiment of the present disclosure.
FIG. 7 is a schematic flowchart of a ranging or positioning method according to an embodiment of the present disclosure.
FIG. 8 is a schematic diagram of a ranging or positioning apparatus according to an embodiment of the present disclosure.
FIG. 9a is a schematic diagram of a communication device according to an embodiment of the present disclosure.
FIG 9b is a schematic diagram of a chip according to an embodiment of the present disclosure.

### DETAILED DESCRIPTION

Embodiments of the present disclosure proposes a ranging or positioning method, a ranging or positioning apparatus, a communication device, a communication system, and a storage medium. In some embodiments, terms such as "ranging or positioning method", "information processing method", and "communication method" may be used interchangeably; terms such as "information transmission apparatus", "information processing apparatus", and "communication apparatus" may be used interchangeably; and terms such as "information processing system" and "communication system" may be used interchangeably.

The embodiments of the present disclosure are not exhaustive and are only illustrative of some embodiments, and are not intended to specifically limit the protection scope of the present disclosure. In the absence of conflicts, each step in an embodiment may be implemented as an independent embodiment, and the steps may be arbitrarily combined. For example, a solution obtained by omitting some steps in an embodiment may also be implemented as an independent embodiment, and the order of steps in an embodiment may be arbitrarily exchanged. In addition, optional implementations in an embodiment may be arbitrarily combined. Moreover, different embodiments may be arbitrarily combined. For example, some or all of the steps of different embodiments may be arbitrarily combined, and an embodiment may be arbitrarily combined with optional implementations of other embodiments.

In the embodiments of the present disclosure, unless otherwise specified and unless there is a logical conflict, terms and/or descriptions in the various embodiments are consistent and may refer to each other, and the technical features in different embodiments may be combined according to their inherent logical relationships to form new embodiments.

Terms used in the embodiments of the present disclosure are only for the purpose of describing specific embodiments, and are not intended to limit the present disclosure.

In the embodiments of the present disclosure, unless otherwise stated, elements expressed in a singular form, such as "a", "an", "the", "said", "foregoing", "aforementioned", "preceding", "this", etc., may refer to "one and only one" or "one or more", "at least one", etc. For example, when an article such as "a", "an", or "the" is used in translation, the noun following the article may be understood as a singular expression or a plural expression.

In the embodiments of the present disclosure, "a/the plurality of" refers to two or more.

In some embodiments, terms such as "at least one of", "one or more", "a plurality of", "multiple", etc., may be used interchangeably.

In some embodiments, expressions such as "at least one of A and B", "A and/or B", "in a case, A, and in another case, B", "in response to a case, A, and in response to another case, B", etc., may include the following technical solutions depending on the situation: in some embodiments, A (performing A independently of B); in some embodiments, B (performing B independently of A); in some embodiments, selecting to perform A or B (performing A and B selectively); in some embodiments, both A and B (performing both A and B). When there are more branches such as A, B, C, etc., the above similarly applies.

In some embodiments, expressions such as "A or B" may include the following technical solutions depending on the situation: in some embodiments, A (performing A independently of B); in some embodiments, B (performing B independently of A); in some embodiments, selecting to perform A or B (performing A and B selectively). When there are more branches such as A, B, C, etc., the above similarly applies.

Prefix terms such as "first", "second", etc., in the embodiments of the present disclosure are only used to distinguish different described objects, and do not limit the position, order, priority, quantity, or content of the described objects. The description of the objects refers to the context of the claims or embodiments, and should not be construed as redundant limitations due to the use of the prefix terms. For example, if the described object is a "field", the ordinal numbers before "field" in a "first field" and a "second field" do not limit the position or order of the "fields", and "first" and "second" do not limit whether the "fields" they modify are in the same message, nor do they limit the sequence of the "first field" and the "second field". For another example, if the described object is a "level", the ordinal numbers before "level" in a "first level" and a "second level" do not limit the priority between the "levels". For another example, the quantity of the described objects is not limited by the ordinal numbers and may be one or more. Taking a "first device" as an example, the quantity of the "device" may be one or more. In addition, objects modified by different prefix terms may be the same or different. For example, if the described object is a "device", a "first device" and a "second device" may be the same device or different devices, and their types may be the same or different. For another example, if the described object is "information", "first information" and "second information" may be the same information or different information, and their content may be the same or different.

In some embodiments, "comprising A", "including A", "indicating A", and "carrying A" may be interpreted as directly carrying A or indirectly indicating A.

In some embodiments, terms such as "in response to...", "in response to determining...", "in a case of...", "when...", "if...", etc., may be used interchangeably.

In some embodiments, terms such as "greater than", "greater than or equal to", "not less than", "more than", "more than or equal to", "not fewer than", "higher than", "higher than or equal to", "not lower than", "above", etc., may be used interchangeably; and terms such as "less than", "less than or equal to", "not greater than", "fewer than", "fewer than or equal to", "not more than", "lower than", "lower than or equal to", "not higher than", "below", etc., may be used interchangeably.

In some embodiments, terms such as "apparatus", etc., may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", "subject", etc., may be used interchangeably.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc., may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc., may be used interchangeably.

In some embodiments, obtaining data, information, etc., may comply with the laws and regulations of the country where the obtainment takes place.

In some embodiments, data, information, etc., may be obtained with the user's consent.

In addition, each element, each row, or each column in tables of the embodiments of the present disclosure may be implemented as an independent embodiment, and any combination of any elements, any rows, or any columns may also be implemented as an independent embodiment.

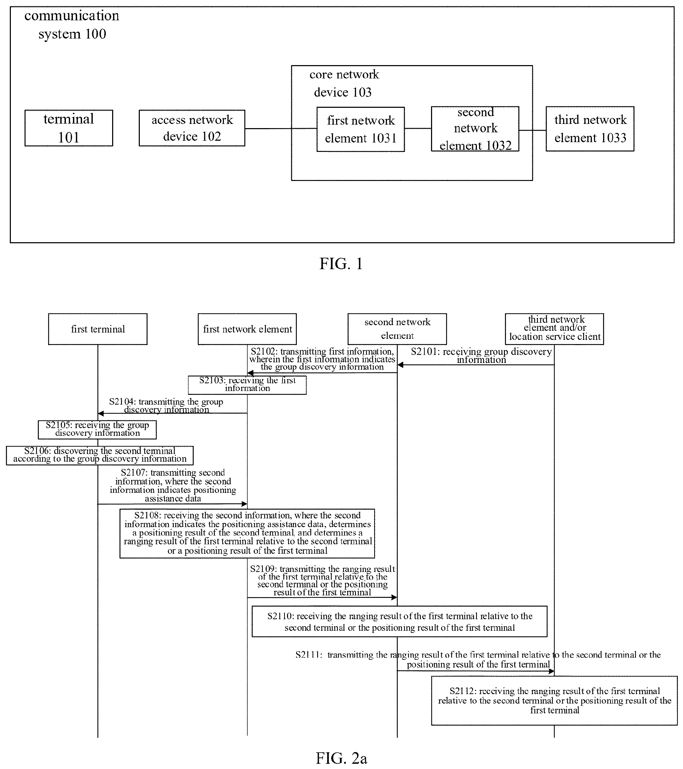

FIG. 1 is a schematic architecture diagram of a communication system according to an embodiment of the present disclosure.

As shown in FIG. 1, a communication system 100 includes a terminal 101, an access network device 102, and a core network device 103.

In some embodiments, the terminal 101 may include at least one of, for example, a mobile phone, a wearable device, an Internet of Things device, a vehicle with a communication function, a smart vehicle, a tablet computer (Pad), a computer with wireless transmitting and receiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited to this.

In some embodiments, the access network device 102 is, for example, a node or device that connects a terminal to a wireless network. The access network device may include at least one of: an evolved node B (eNB) in a 5G communication system, a next-generation evolved node B (ng-eNB), a next-generation node B (gNB), a node B (NB), a home node B (HNB), a home evolved node B (HeNB), a wireless backhaul device, a radio network controller (RNC), a base station controller (BSC), a base transceiver station (BTS), a baseband unit (BBU), a mobile switching center, a base station in a 6G communication system, an Open RAN, a cloud RAN, a base station in other communication systems, and an access node in a wireless fidelity (WiFi) system, but is not limited to this.

In some embodiments, the technical solutions of the present disclosure may be applied to an open RAN architecture. In this case, interfaces between the access network devices or within the access network devices involved in the embodiments of the present disclosure may become internal interfaces of the Open RAN, and processes and information interactions between these internal interfaces may be implemented through software or programs.

In some embodiments, the access network device may include a central unit (CU) and a distributed unit (DU). The CU may also be referred to as a control unit. Protocol layers of the access network device may be split by using the CU-DU structure. Functions of some protocol layers are placed in the CU for centralized control; functions of the remaining part or all of the protocol layers are distributed in the DU, and the CU centrally controls the DU, but the present disclosure is not limited to this.

In some embodiments, the core network device 103 may be a device, including a first network element 1031, a second network element 1032, etc., or may be a plurality of devices or a device group, including all or part of a first network element 1031, a second network element 1032, etc. The network element may be virtual or physical. The core network includes, for example, at least one of an evolved packet core (EPC), a 5G core network (5GCN), and a next generation core (NGC).

In some embodiments, the first network element 1031 is, for example, a location management function (LMF) network element.

In some embodiments, the first network element 1031 is configured to provide a location management function services to the terminal, and its name is not limited to this.

In some embodiments, the second network element 1032 is, for example, a gateway mobile location center (GMLC) network element.

In some embodiments, the second network element 1032 is configured to perform a registration authorization check and request routing information, and its name is not limited to this.

In some embodiments, the third network element 1033 is, for example, an application function (AF) network element.

In some embodiments, the third network element 1033 is configured to interact with other core network control plane network functions (NFs) and provide business services, and its name is not limited to this.

In some embodiments, the third network element 1033 may be independent of the core network device 103.

In some embodiments, the third network element 1033 may be part of the core network device 103.

It may be understood that the communication system described in the embodiments of the present disclosure is intended to provide a clearer explanation of the technical solution of the embodiments of the present disclosure, and does not constitute limitations on the technical solution provided by the embodiments of the present disclosure. Those skilled in the art may know that with the evolution of the system architecture and the emergence of new business scenarios, the technical solution provided by the embodiments of the present disclosure is also applicable to similar technical problems.

The following embodiments of the present disclosure may be applied to the communication system 100 shown in FIG. 1, or part of the entities, but are not limited to this. The entities shown in FIG. 1 are illustrative. The communication system may include all or part of the entities in FIG. 1 or other entities not shown in FIG. 1, and the number and form of the entities may be arbitrary. The connection relationships between the entities are illustrative. The entities may or may not be connected, and the connections may be in any manner, either direct or indirect, and either wired or wireless.

The embodiments of the present disclosure may be applied to long term evolution (LTE), LTE-advanced (LTE-A), LTE-beyond (LTE-B), SUPER 3G, IMT-advanced, 4th generation (4G) mobile communication system, 5th generation (5G) mobile communication system, 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine to machine (M2M) system, Internet of Things (IoT) system, vehicle-to-everything (V2X), a system using other communication methods, a next-generation system extended based on them, etc. In addition, a plurality of systems may be combined (e.g., a combination of LTE or LTE-A and 5G) for application.

To facilitate understanding, terms involved in the present disclosure are first introduced.

### 1. Access and mobility management function (AMF) network element

The AMF network element is a logical node function network element on a core network side, serves as a control plane access point for a terminal and a wireless core network, receives all connection and session-related information from user equipment, and performs registration, connection, reachability, and mobility management. In addition, the AMF network element provides a session management message transmission channel for the terminal and a session management function (SMF) device, and provides authentication and authorization functions when the user accesses.

### 2. Location management function (LMF) network element

The LMF is located locally in the radio access network (RAN) or on the core network (CN) side and is configured to provide a location management function service to the UE.

### 3. Application function (AF) network element

The AF network element is similar to an application server, and may interact with other core network control plane network functions (NFs) and provide business services. The AF network element may exist for different application services and may be owned by an operator or a trusted third party.

### 4. Network exposure function (NEF) network element

The NEF network element is located between the core network and external third-party application functions (maybe some internal AFs), and is responsible for managing all external applications that access exposed network data. The NEF network element provides corresponding security guarantees to ensure the security of external applications to a 3GPP network, and provides functions such as exposure of quality of service (QoS) customization capability, mobility status event subscription, and AF request distribution for external applications.

### 5. User plane function (UPF) network element

The EPF network element includes routing and forwarding of user data packets, data interaction with external data networks, QoS processing of the user plane, implementation of flow control rules (e.g., gating, redirection, traffic steering), etc.

### 6. Unified data management (UDM) network element

The UDM network element is responsible for the management of terminal identifiers, subscription data, and authentication data, and the registration management of a serving network element of the terminal (e.g., the AMF network element currently providing services to the terminal). For example, when the terminal switches the accessed AMF network element, the UDM network element also transmits a deregistration message to the old AMF network element, and requires the old AMF network element to delete user-related information).

### 7. Policy control function (PCF) network element

The PCF network element supports a unified policy framework to manage network behaviors, provides policy rules to a network entity for implementation and execution, and accesses subscription information in a unified data repository.

### 8. Unified data repository (UDR) network element

The UDR network element is configured for the UDM network element to store subscription data or read subscription data, and for the PCF network element to store policy data or read policy data.

### 9. Radio access network (RAN)

The RAN is configured to control user access to a mobile communication network through wireless means.

To support a direct communication between terminals, a sidelink (SL) communication method is introduced. A terminal may communicate with a base station through a relay function of another terminal. Ranging refers to determining a distance between two or more terminals, or a direction from a terminal to another terminal, via a PC5 interface. The PC5 interface refers to a communication interface between terminals. SL positioning refers to estimating a location of a terminal being or to be positioned based on an SL. For example, the ranging or SL positioning of the terminal being or to be positioned may be performed based on information of a terminal (e.g., a located user equipment (located UE)). A reference terminal may be, for example, an SL reference terminal whose location is known or may be known in the ranging or SL positioning.

Optionally, in a network-assisted sidelink positioning procedure, the location of the terminal being or to be positioned may be estimated with the assistance of the network by using a location of one or more located terminals as well as a distance between the one or more located terminals and the terminal being or to be positioned and/or a direction from the one or more located terminals to the terminal being or to be positioned, which is not limited herein.

In some embodiments, the "network" may be interpreted as a device (e.g., an access network device, a core network device, etc.) included in the network.

Optionally, the one or more located terminals may be discovered by the terminal or the core network device to support network-assisted sidelink positioning, which is not limited herein.

Optionally, a terminal with a non-access stratum (NAS) signaling connection is in a CM-Connected state and may interact with a 5G Core (5GC) to estimate the location of the terminal with the assistance of the network.

Optionally, when the LMF network element determines that network-assisted sidelink positioning is used, the LMF network element may trigger a target terminal to perform discovery of the located terminal.

Optionally, in order to assist the target terminal, the LMF network element may provide the target terminal with a candidate located terminal list. In this case, the LMF network element may maintain the candidate located terminal list, and the candidate located terminal list may include, for example, capabilities and location information of the located terminals.

Optionally, when the target terminal is out of coverage and cannot establish a NAS connection with the AMF network element, for a 5GC mobile originated location request (5GC-MO-LR) or a pending 5GC mobile terminated location request (5GC-MT-LR), such as a delayed 5GC-MT-LR, the following principles may be applied: the target terminal performs discovery and selection of the located terminal; the target terminal may transmit its ranging measurements/results to the located terminal; the located terminal may report the ranging/SL positioning measurement result to the LMF network element, which may include the ranging measurements/results received from the target terminal, where endpoints of a long term evolution positioning protocol (LPP) message are the LMF network element and the located terminal; and the LMF network element may use the received information to calculate a location of the target terminal and provide the resulting location to the target terminal through the located terminal or provide the resulting location to a location service client (LCS client) or an application server through the NF.

Optionally, group member discovery refers to that mutually affiliated users may discover each other, and the mutual affiliation may mean sharing the same application layer group identifier (ID).

Optionally, group member discovery may be performed based on Mode A and Mode B.

Optionally, Mode A may use a single discovery protocol message (Announcement). A terminal that announces messages transmits a group member discovery notification message, and the group member discovery notification message may include: a discovery message type, announcer information, and an application layer group ID.

Optionally, Mode B may use two discovery protocol messages (request and response). A discoverer terminal transmits a group member discovery request message, and the group member discovery request message may include: a discovery message type, discoverer information, an application layer group ID, and optional target information. Other discovered terminals that match the parameters (including the application layer group ID and the target information) contained in the group member discovery request message transmit a response message to the discoverer terminal.

Optionally, group discovery and/or management of demand-based group communication for commercial services is supported. The group discovery and/or formation and/or management may be performed in an application layer in coordination with an application server.

Based on this, the present disclosure proposes a ranging or positioning method.

Optionally, in some embodiments, the method of the present disclosure may be applied to ranging or SL positioning scenarios. For example, in some embodiments, the method of the present disclosure may be applied to any other possible ranging or positioning scenarios.

FIG. 2a is a schematic interaction diagram of a ranging or positioning method according to an embodiment of the present disclosure. As shown in FIG. 2a, the embodiment of the present disclosure relates to a ranging or positioning method, which may be performed by the communication system 100. This method includes the following steps.

In step S2101, a second network element receives group discovery information transmitted by a third network element and/or a location service client.

In some embodiments, the second network element may receive the group discovery information transmitted by the third network element and/or the location service client, and the group discovery information indicates that a second terminal belongs to a first terminal group, and the second terminal is used for ranging or positioning of a first terminal.

In some embodiments, the second network element is, for example, a GMLC network element.

In some embodiments, the third network element is, for example, an AF network element or an NEF network element.

In some embodiments, the location service client may be denoted as an LCS client.

In some embodiments, the third network element may transmit the group discovery information to the second network element.

In some embodiments, the location service client may transmit the group discovery information to the second network element.

In some embodiments, both the third network element and the location service client may transmit the group discovery information to the second network element.

In some embodiments, the second network element may receive the group discovery information transmitted by the third network element and/or the location service client.

In some embodiments, the group discovery information indicates that the second terminal belongs to the first terminal group.

In some embodiments, the first terminal group may be a terminal group indicated by the group discovery information, or may also be a terminal group where the first terminal is located.

In some embodiments, the group discovery information may be configured to identify the first terminal group, such as information identifying the first terminal group.

In some embodiments, the group discovery information indicates that the first terminal belongs to the first terminal group, which may be understood as indicating that both the first terminal and the second terminal belong to the first terminal group.

In some embodiments, the group discovery information is configured to identify the first terminal group and indicate that the first terminal belongs to the first terminal group.

In some embodiments, the group discovery information may be configured to identify first terminal group information, or the group discovery information may indicate that the second terminal needs to be in the first terminal group, or the group discovery information may also indicate that the first terminal and the second terminal need to be in the same terminal group (the same terminal group may be, for example, the first terminal group, or may not be the first terminal group), or the group discovery information may also indicate that the first terminal and the second terminal need to be in the first terminal group.

In some embodiments, the group discovery information may be used for discovering the second terminal.

In some embodiments, the group discovery information may be used for discovering a group member related to the second terminal.

In some embodiments, the group discovery information may be used for determining a candidate terminal list, the candidate terminal list may include one or more candidate terminals, and the second terminal may be determined from the one or more candidate terminals.

In some embodiments, the group discovery information may be denoted as group discovery information.

In some embodiments, the group discovery information includes at least one of: first information, second information, third information, and fourth information. The first information is configured to identify the first terminal group information, the second information indicates that the second terminal needs to be in the first terminal group, the third information indicates that the first terminal and the second terminal need to be in the same terminal group, and the fourth information indicates that the first terminal and the second terminal need to be in the first terminal group, thereby effectively improving the comprehensiveness of the indication of the group discovery information, so as to support accurate discovery of the second terminal used for ranging or positioning of the first terminal.

In some embodiments, the first information may be configured to identify a specified terminal group (e.g., the first terminal group); the second information may indicate that the second terminal may be in the first terminal group; the third information may indicate that the first terminal and the second terminal may be in the same terminal group, and in this case, this terminal group where the first terminal and the second terminal are located may be or may not be the first terminal group indicated by the first information; and the fourth information may indicate that the first terminal and the second terminal may be in the first terminal group, which are not limited herein.

In some embodiments, the first terminal may be, for example, a terminal being or to be ranged or SL positioned.

In some embodiments, the second terminal may be, for example, a terminal whose location is known or may be known and that may be used for ranging or SL positioning.

In some embodiments, the first terminal may be, for example, a target terminal, and the second terminal may be, for example, a located terminal.

In some embodiments, the second terminal may be selected based on information of the first terminal, for example, based on an identifier of the first terminal (an optional example of the information of the first terminal), and a candidate terminal may be selected from the one or more candidate terminals as the second terminal.

In some embodiments, the first terminal may be, for example, a target UE, and the number of the target UEs may be one or more.

In some embodiments, the second terminal may be, for example, a located UE, and the number of the located UEs may be one or more.

In some embodiments, the ranging or SL positioning of the first terminal may be performed based on information (e.g., location information) of the selected second terminal.

In some embodiments, it is determined to perform ranging or positioning on the first terminal according to service scenario requirements.

In some embodiments, it is determined to perform ranging or positioning on the first terminal based on a third-party application program.

In some embodiments, it is determined to perform ranging or positioning on the first terminal, and the group discovery information is indicated.

In some embodiments, in a case that the third network element and/or the location service client determines to perform ranging or positioning on the first terminal, it may indicate the group discovery information to the second network element. For example, it may be determined whether to perform ranging or positioning on the first terminal based on service scenario requirements or based on a third-party application program.

In some embodiments, the third network element and/or the location service client may carry the group discovery information in any possible message and transmit this message to the second network element to indicate the group discovery information to the second network element.

In some embodiments, the third network element and/or the location service client may transmit a ranging or SL positioning service request message to the second network element, where the ranging or SL positioning service request message may include the group discovery information.

In some embodiments, the ranging or SL positioning service request message may be, for example, a ranging/SL positioning service request, and the ranging/SL positioning service request may include the group discovery information.

In some embodiments, the second network element may receive the ranging or SL positioning service request message, and obtain the group discovery information from the ranging or SL positioning service request message.

In some embodiments, the GMLC network element may receive the group discovery information transmitted by the AF network element or the NEF network element.

In some embodiments, the GMLC network element may receive the group discovery information transmitted by the LCS client.

In some embodiments, "obtain", "acquire", "gain", "receive", "transmit", "bidirectionally transmit", "transmit and/or receive" may be used interchangeably, which may be interpreted as receiving from another entity, obtaining from a protocol, obtaining from a higher layer, obtaining through self-processing, self-implementation, and other meanings.

In some embodiments, in a case that the group discovery information mentioned above is not involved in optional embodiments of the subsequent steps, step S2101 may be omitted.

In step S2102, the second network element transmits first information to a first network element, and the first information indicates the group discovery information.

In some embodiments, the first network element is, for example, an LMF network element.

In some embodiments, the first network element is configured to provide location management function services to a terminal, and its name is not limited to this.

In some embodiments, the second network element may transmit the group discovery information to the first network element.

In some embodiments, the first network element may receive the group discovery information transmitted by the second network element.

In some embodiments, after receiving the group discovery information transmitted by the AF network element or the NEF network element or the LCS client, the GMLC network element may transmit the group discovery information to the LMF network element.

In step S2103, the first network element receives the first information transmitted by the second network element.

In some embodiments, the LMF network element may receive the group discovery information transmitted by the GMLC network element.

In some embodiments, the first network element may also select the second terminal from at least one candidate terminal related to the group discovery information, and the selected second terminal may be used for ranging or positioning of the first terminal.

In some embodiments, the first network element may also determine a candidate terminal list according to the group discovery information, where the candidate terminal list includes at least one candidate terminal, and transmit the candidate terminal list to the first terminal to support the first terminal in selecting the second terminal from the at least one candidate terminal to perform ranging or positioning.

In some embodiments, the at least one candidate terminal refers to a terminal whose location is known or may be known. The number of the at least one candidate terminal may be one or more. The candidate terminal list may be determined according to the information of the first terminal and the group discovery information, and the candidate terminal list includes at least one candidate terminal. Then, the second terminal is selected from the at least one candidate terminal.

In some embodiments, the first network element may determine a located terminal according to the group discovery information, and the located terminal may be selected and determined based on one or more of existing functions such as area of interest location information, information configured for the terminal, QoS required for positioning, or together with the group discovery information and one or more of the above existing function examples. A terminal group to which the determined located terminal belongs may be the same as or different from a terminal group to which a target terminal belongs.

In some embodiments, the first network element may also determine the located terminal according to the group discovery information, reference information, target information, etc.

In some embodiments, the reference information includes at least one of: quality of service (QoS) required for positioning, and terminal preference.

In some embodiments, the QoS required for positioning may be, for example, QoS required for location, i.e., QoS required for positioning and/or location.

In some embodiments, the target information may at least include information describing a positioning capability.

In some embodiments, the target information may include any other possible information, such as information describing established connections, information describing compliance with terminal preference of the first terminal, etc.

In some embodiments, after determining the candidate terminal list according to the group discovery information, the first network element may also indicate the candidate terminal list to the first terminal, for example, the first network element transmits the candidate terminal list to the first terminal.

In step S2104, the first network element transmits the group discovery information to the first terminal.

In some embodiments, after receiving the group discovery information transmitted by the second network element, the first network element may transmit the group discovery information to the first terminal.

In some embodiments, the LMF network element may transmit the group discovery information to the first terminal, and the group discovery information may be configured to trigger the first terminal to discover the second terminal.

In some embodiments, the LMF network element may transparently transmit the group discovery information to the first terminal via the AMF network element.

In some embodiments, the first network element may carry the group discovery information in any possible message and transmit this message to the first terminal to indicate the group discovery information to the first terminal.

In some embodiments, the first network element may transmit a ranging or SL positioning service request message to the first terminal, and the ranging or SL positioning service request message may include the group discovery information.

In step S2105, the first terminal receives the group discovery information transmitted by the first network element.

In some embodiments, the first terminal may receive the group discovery information transmitted by the LMF network element or receive the group discovery information transparently transmitted by the LMF network element via the AMF network element.

In some embodiments, the first terminal may receive the ranging or SL positioning service request message transmitted by the first network element and obtain the group discovery information from the ranging or SL positioning service request message.

In some embodiments, in a case that the first terminal determines that the group discovery information is not received, the first terminal transmits indication information to the first network element, and the indication information is configured to instruct the first network element to retransmit the group discovery information.

In some embodiments, in a case that the first terminal does not successfully receive the group discovery information, the first terminal may also instruct the first network element to retransmit the group discovery information.

In step S2106, the first terminal discovers the second terminal according to the group discovery information.

In some embodiments, after obtaining the group discovery information, the first terminal may discover the second terminal according to the group discovery information, and the discovered second terminal may be used for ranging or positioning of the first terminal.

In some embodiments, the first terminal may determine at least one candidate terminal according to the group discovery information and determine the second terminal from the at least one candidate terminal.

In some embodiments, the at least one candidate terminal determined by the first terminal according to the group discovery information may be, for example, a terminal that may be selected to perform ranging or positioning on the first terminal. The candidate terminal may also be named in any other possible form, such as a second terminal, a reference terminal, etc., which is not limited herein.

In some embodiments, the first terminal may determine one or more second terminals according to the group discovery information and select the second terminal that actually participates in ranging or positioning of the first terminal from the one or more second terminals, which is not limited herein.

In some embodiments, the first terminal may also directly receive the candidate terminal list indicated by the first network element and select the second terminal from the at least one candidate terminal included in the candidate terminal list. The selected second terminal may be used for ranging or positioning of the first terminal.

In some embodiments, after the first terminal discovers the second terminal, the LMF network element may initiate a positioning procedure for the second terminal to obtain a positioning result of the second terminal.

In some embodiments, the first terminal may also perform group member discovery based on the received group discovery information and perform a ranging or positioning procedure to use a long-term evolution positioning protocol (LPP) or a sidelink positioning protocol (SLPP) to measure a ranging result of the first terminal relative to the second terminal and calculate a positioning result of the first terminal.

In some embodiments, in a case that the first terminal does not receive information of the second terminal (e.g., information of the second terminal discovered by the LMF network element), the first terminal may also perform the group member discovery according to the received group discovery information to discover an available second terminal.

In some embodiments, the first terminal may determine one or more second terminals according to the reference information and select the second terminal from the one or more second terminals according to the group discovery information.

In some embodiments, the first terminal may determine at least one second terminal according to the reference information and the group discovery information, and select the second terminal from the at least one second terminal.

In some embodiments, the "second terminal" refers to, for example, a second terminal that actually participates in ranging or positioning of the first terminal.

In some embodiments, the reference information includes at least one of: quality of service (QoS) required for positioning, and terminal preference.

In some embodiments, the QoS required for positioning may be, for example, QoS required for location, i.e., QoS required for positioning and/or location.

In some embodiments, the terminal preference may be configured to describe the first terminal's preference for a terminal that may participate in positioning, which is not limited herein.

In some embodiments, the terminal preference may be, for example, user equipment (UE) preference (UE preference), which is not limited herein.

In some embodiments, the terminal preference may be, for example, UE1 preferring UE2 or UE1 preferring UE3, which is not limited herein.

In some embodiments, the terminal preference may also be, for example, preferring a terminal that has established connection therewith, or preferring a terminal belonging to the same cell, which is not limited herein.

In some embodiments, a preference standard or a preference condition may be predefined, and a candidate terminal that meets this preference standard or this preference condition may be determined, which is not limited herein.

In some embodiments, the first terminal may discover at least one candidate terminal in the first terminal group according to the group discovery information and select a candidate terminal having target information from the at least one candidate terminal as the second terminal.

In some embodiments, the target information at least includes information describing a positioning capability.

In some embodiments, the candidate terminal having the target information indicates that the candidate terminal has a positioning capability.

In some embodiments, the target information may include any other possible information, such as information describing established connections, information describing compliance with terminal preference of the first terminal, etc.

In some embodiments, during a procedure of discovering the second terminal according to the group discovery information, the first terminal may transmit a notification to other terminals (e.g., a terminal in a second terminal group) to notify the other terminals to feedback relevant information, such as whether they have positioning capabilities, identifiers of cells where they are, whether they have established connections therewith, etc. The first terminal may discover the second terminal based on the feedback relevant information.

In some embodiments, the first terminal may also determine whether other terminals (e.g., a terminal in a second terminal group) have positioning capabilities, identifiers of cells where they are, whether they have established connections therewith, etc., based on information sent by a network side.

In some embodiments, the first terminal may transmit the information of the second terminal to the first network element, where the information of the second terminal is used for the first network element to perform a privacy check to obtain a check result and determine that the check result satisfies a condition.

In some embodiments, the first terminal may transmit the information of the discovered second terminal to the network side for further checks, such as a privacy check, for performing the ranging or positioning procedure.

In some embodiments, the first terminal may also transmit the information of the second terminal to the first network element.

In some embodiments, the first network element performs ranging or positioning on the first terminal according to the information of the second terminal.

In some embodiments, the first terminal may select a new second terminal and instruct the first network element to perform ranging or positioning on the new second terminal.

In some embodiments, the number of the second terminals may be one or more.

In some embodiments, in a case that communication between the first terminal and the second terminal fails, a new second terminal is reactivated, and ranging or positioning is performed on the first terminal according to the new second terminal.

In some embodiments, in a case that ranging or positioning is performed on the first terminal based on information of a certain second terminal, and communication between the first terminal and this second terminal fails, a new second terminal is reactivated, and ranging or positioning is performed on the first terminal based on this new second terminal.

In some embodiments, according to requirements of actual positioning accuracy, a target number is determined, and the target number of second terminals are selected from a plurality of second terminals, where the target number may be, for example, one or more.

In some embodiments, any possible method may be used to select the target number of second terminals from the plurality of second terminals.

In some embodiments, the target number may be positively correlated with the requirements of actual positioning accuracy. For example, the higher the requirements of actual positioning accuracy, the greater the target number; and the lower the requirements of actual positioning accuracy, the smaller the target number.

In some embodiments, in a case that there are a plurality of second terminals, ranging or positioning may be performed on the first terminal based on information of one or at least part of the plurality of second terminals. Depending on the requirements of actual positioning accuracy, ranging or positioning may be performed on the first terminal based on the information of one of the plurality of second terminals, or ranging or positioning may be performed on the first terminal based on the information of multiple second terminals of the plurality of second terminals.

In step S2107, the first terminal transmits second information to the first network element, where the second information indicates positioning assistance data.

In some embodiments, the positioning assistance data is reference data for ranging or positioning the first terminal.

In some embodiments, the positioning assistance data and the positioning result of the second terminal are used for ranging or positioning the first terminal to obtain the ranging result of the first terminal relative to the second terminal or the positioning result of the first terminal.

In some embodiments, the positioning assistance data may be, for example, an included angle between a line connecting the first terminal and the second terminal and a reference line, or may be any other possible reference data for assisting ranging or positioning.

In some embodiments, the first terminal may obtain the positioning assistance data by performing protocol procedures agreed in the above LPP or SLPP.

In some embodiments, the first terminal may transmit a ranging or SL positioning service response message to the first network element. The ranging or SL positioning service response message may include the information of the second terminal and/or the second information to indicate the positioning assistance data based on the second information.

In some embodiments, the ranging or SL positioning service response message may be, for example, a ranging/SL positioning service response, and the ranging/SL positioning service response may include the positioning assistance data.

In step S2108, the first network element receives the second information transmitted by the first terminal, where the second information indicates the positioning assistance data, determines a positioning result of the second terminal, and determines a ranging result of the first terminal relative to the second terminal or a positioning result of the first terminal.

In some embodiments, the first network element may receive the positioning assistance data transmitted by the first terminal and initiate a positioning procedure for the second terminal to determine the positioning result of the second terminal.

In some embodiments, the first network element may, for example, initiate the positioning procedure for the second terminal by performing a mobile terminated location request (MT-LR) procedure.

In some embodiments, the first network element may perform the mobile terminated location request (MT-LR) procedure to determine the positioning result of the second terminal.

In some embodiments, the first network element may refer to the positioning assistance data and the positioning result of the second terminal to determine the ranging result of the first terminal relative to the second terminal or the positioning result of the first terminal.

In some embodiments, the LMF network element may refer to the positioning assistance data and the positioning result of the located terminal to determine the ranging result of the first terminal relative to the second terminal or the positioning result of the first terminal.

In step S2109, the first network element transmits the ranging result of the first terminal relative to the second terminal or the positioning result of the first terminal to the second network element.

In some embodiments, after determining the ranging result of the first terminal relative to the second terminal or the positioning result of the first terminal, the first network element may transmit the ranging result of the first terminal relative to the second terminal or the positioning result of the first terminal to the second network element.

In some embodiments, the LMF network element may transmit the ranging result of the first terminal relative to the second terminal or the positioning result of the first terminal to the GMLC network element.

In some embodiments, the LMF network element may transmit the ranging or SL positioning service response message to the GMLC network element. The ranging or SL positioning service response message may carry the ranging result of the first terminal relative to the second terminal or the positioning result of the first terminal to indicate the ranging result of the first terminal relative to the second terminal or the positioning result of the first terminal to the GMLC network element.

In step S2110, the second network element receives the ranging result of the first terminal relative to the second terminal or the positioning result of the first terminal transmitted by the first network element.

In some embodiments, the second network element may receive the ranging result of the first terminal relative to the second terminal or the positioning result of the first terminal indicated by the first network element.

In some embodiments, the GMLC network element may receive the ranging result of the first terminal relative to the second terminal or the positioning result of the first terminal indicated by the LMF network element.

In some embodiments, the GMLC network element may receive the ranging or SL positioning service response message transmitted by the LMF network element and obtain the ranging result of the first terminal relative to the second terminal or the positioning result of the first terminal from the ranging or SL positioning service response message.

In step S2111, the second network element transmits the ranging result of the first terminal relative to the second terminal or the positioning result of the first terminal to the third network element and/or the location service client.

In some embodiments, the second network element may transmit the ranging result of the first terminal relative to the second terminal or the positioning result of the first terminal to the third network element and/or the location service client.

In some embodiments, the GMLC network element may transmit the ranging result of the first terminal relative to the second terminal or the positioning result of the first terminal to the AF network element or the NEF network element.

In some embodiments, the GMLC network element may transmit the ranging result of the first terminal relative to the second terminal or the positioning result of the first terminal to the location service client.

In some embodiments, the GMLC network element may transmit the ranging or SL positioning service response message to the AF network element or the NEF network element or the location service client, and the ranging result of the first terminal relative to the second terminal or the positioning result of the first terminal is carried in the ranging or SL positioning service response message.

In step S2112, the third network element and/or the location service client receive the ranging result of the first terminal relative to the second terminal or the positioning result of the first terminal transmitted by the second network element.

The ranging or positioning method involved in embodiments of the present disclosure may include at least one of steps S2101 to S2112. For example, step S2101 may be implemented as an independent embodiment, step S2102 may be implemented as an independent embodiment, and so on. For another example, steps S2101+S2102 may be implemented as an independent embodiment, steps S2101+S2102+S2103 may be implemented as an independent embodiment, and so on, but the present disclosure is not limited to this.

In this implementation or embodiment, in case of no conflict, each step may be implemented independently, combined arbitrarily, or exchanged in order. Optional implementations or examples may be arbitrarily combined and may be arbitrarily combined with any steps in other implementations or embodiments.

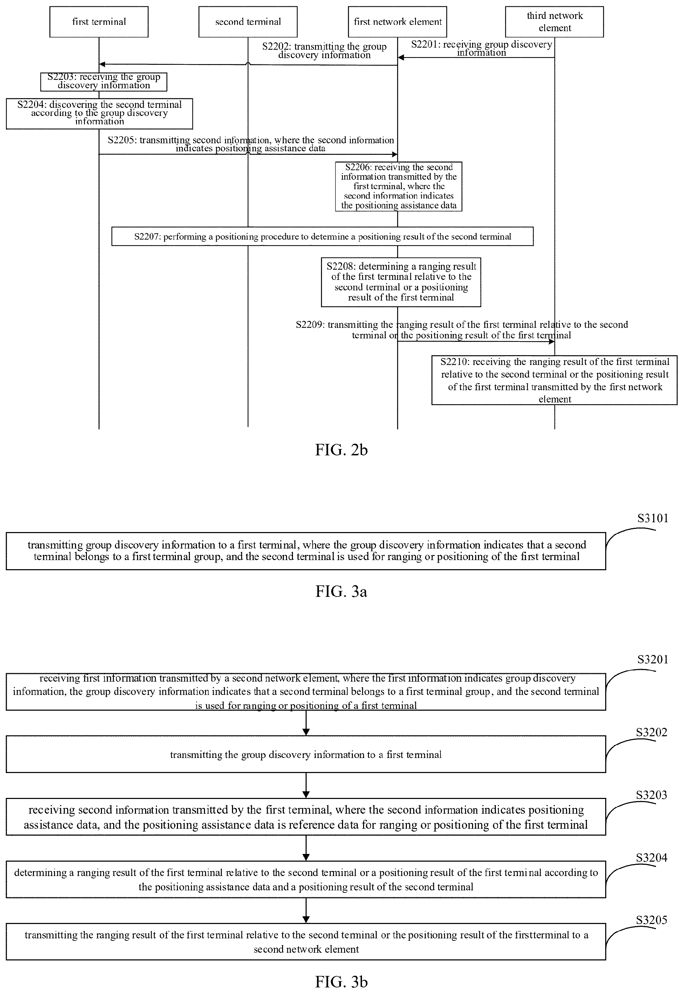

FIG. 2b is a schematic interaction diagram of a ranging or positioning method according to an embodiment of the present disclosure. As shown in FIG. 2b, embodiments of the present disclosure relate to a ranging or positioning method, which may be performed by the communication system 100. This method includes the following steps.

In step S2201, a first network element receives group discovery information transmitted by a third network element.

In some embodiments, the first network element may receive the group discovery information transmitted by the third network element via a second network element.

In step S2202, the first network element transmits the group discovery information to a first terminal.

In step S2203, the first terminal receives the group discovery information transmitted by the first network element.

For descriptions of steps S2201, S2202, and S2203, reference may be made to the embodiments shown in FIG. 2a above, and details are not repeated here.

In step S2204, the first terminal discovers a second terminal according to the group discovery information.

In some embodiments, after obtaining the group discovery information, the first terminal may discover the second terminal according to the group discovery information, and the discovered second terminal may be used for ranging or positioning of the first terminal.

In some embodiments, the first terminal may determine at least one candidate terminal according to the group discovery information and determine the second terminal from the at least one candidate terminal.

In some embodiments, the at least one candidate terminal determined by the first terminal according to the group discovery information may be, for example, a terminal that may be selected to perform ranging or positioning on the first terminal. The candidate terminal may also be named in any other possible form, such as a second terminal, a reference terminal, etc., which is not limited herein.

In some embodiments, the first terminal may determine one or more second terminals according to the group discovery information and select the second terminal that actually participates in ranging or positioning of the first terminal from the one or more second terminals, which is not limited herein.

In some embodiments, the first terminal may also directly receive a candidate terminal list indicated by the first network element and select the second terminal from at least one candidate terminal included in the candidate terminal list. The selected second terminal may be used for ranging or positioning of the first terminal.

In some embodiments, after the first terminal discovers the second terminal, an LMF network element may initiate a positioning procedure for the second terminal to obtain a positioning result of the second terminal.

In some embodiments, the first terminal may also perform group member discovery based on the received group discovery information and perform a ranging or positioning procedure to use a long-term evolution positioning protocol (LPP) or a sidelink positioning protocol (SLPP) to measure a ranging result of the first terminal relative to the second terminal and calculate a positioning result of the first terminal.

In some embodiments, in a case that the first terminal does not receive information of the second terminal (e.g., information of the second terminal discovered by the LMF network element), the first terminal may also perform the group member discovery according to the received group discovery information to discover an available second terminal.

In some embodiments, the first terminal may determine one or more second terminals according to reference information and select the second terminal from the one or more second terminals according to the group discovery information.

In some embodiments, the first terminal may determine at least one second terminal according to the reference information and the group discovery information and select the second terminal from the at least one second terminal.

In some embodiments, the "second terminal" refers to, for example, a second terminal that actually participates in ranging or positioning of the first terminal.

In some embodiments, the reference information includes at least one of: quality of service (QoS) required for positioning, and terminal preference.

In some embodiments, the QoS required for positioning may be, for example, QoS required for location, i.e., QoS required for positioning and/or location.

In some embodiments, the terminal preference may be configured to describe the first terminal's preference for a terminal that may participate in positioning, which is not limited herein.

In some embodiments, the terminal preference may be, for example, user equipment (UE) preference (UE preference), which is not limited herein.

In some embodiments, the terminal preference may be, for example, UE1 preference, UE2 preference or UE3 preference, which is not limited herein.

In some embodiments, the terminal preference may also be, for example, preferring a terminal that has established connection therewith, or preferring a terminal belonging to the same cell, which is not limited herein.

In some embodiments, a preference standard or a preference condition may be predefined, and a candidate terminal that meets this preference standard or this preference condition may be determined, which is not limited herein.

In some embodiments, the first terminal may discover at least one candidate terminal in a first terminal group according to the group discovery information and select a candidate terminal having target information from the at least one candidate terminal as the second terminal.

In some embodiments, the target information at least includes information describing a positioning capability.

In some embodiments, the candidate terminal having the target information indicates that the candidate terminal has a positioning capability.

In some embodiments, the target information may include any other possible information, such as information describing established connections, information describing compliance with terminal preference of the first terminal, etc.

In some embodiments, during a procedure of discovering the second terminal according to the group discovery information, the first terminal may transmit a notification to other terminals (e.g., a terminal in a second terminal group) to notify the other terminals to feedback relevant information, such as whether they have positioning capabilities, identifiers of cells where they are, whether they have established connections therewith, etc. The first terminal may discover the second terminal based on the feedback relevant information.

In some embodiments, the first terminal may also determine whether other terminals (e.g., a terminal in a second terminal group) have positioning capabilities, identifiers of cells where they are, whether they have established connections therewith, etc., based on information sent by a network side.

In some embodiments, the first terminal may transmit information of the discovered second terminal to a network side for further checks, such as a privacy check, for performing the ranging or positioning procedure.

In some embodiments, the first terminal may also transmit the information of the second terminal to the first network element.

In some embodiments, the first network element may perform ranging or positioning on the first terminal according to the information of the second terminal.

In some embodiments, the number of the second terminals may be one or more.

In some embodiments, in a case that ranging or positioning is performed on the first terminal based on information of a certain second terminal, and communication between the first terminal and this second terminal fails, a new second terminal is reactivated, and ranging or positioning is performed on the first terminal based on this new second terminal.

In some embodiments, according to requirements of actual positioning accuracy, a target number is determined, and the target number of second terminals are selected from a plurality of second terminals, where the target number may be, for example, one or more.

In some embodiments, any possible method may be used to select the target number of second terminals from the plurality of second terminals.

In some embodiments, the target number may be positively correlated with the requirements of actual positioning accuracy. For example, the higher the requirements of actual positioning accuracy, the greater the target number; and the lower the requirements of actual positioning accuracy, the smaller the target number.

In some embodiments, in a case that there are a plurality of second terminals, ranging or positioning may be performed on the first terminal based on information of one or at least part of the plurality of second terminals. Depending on the requirements of actual positioning accuracy, ranging or positioning may be performed on the first terminal based on the information of one of the plurality of second terminals, or ranging or positioning may be performed on the first terminal based on the information of multiple second terminals of the plurality of second terminals.

In step S2205, the first terminal transmits second information to the first network element, where the second information indicates positioning assistance data.

In step S2206, the first network element receives the second information transmitted by the first terminal, where the second information indicates the positioning assistance data.

For descriptions of steps S2205 and S2206, reference may be made to the embodiments shown in FIG. 2a, and details are not repeated here.

In step S2207, the first network element performs a positioning procedure to determine a positioning result of the second terminal.

In some embodiments, after receiving the positioning assistance data, the first network element may determine the positioning result of the second terminal by performing the positioning procedure.

In some embodiments, the positioning process is, for example, an MT-LR procedure.

In some embodiments, the first network element may retrieve a location of a selected second terminal through the MT-LR procedure. The second terminal is a terminal whose location is known or may be obtained. The location of the second terminal may be pre-obtained and stored, so that the first network element may directly retrieve and determine the location of the second terminal.

In step S2208, the first network element determines a ranging result of the first terminal relative to the second terminal or a positioning result of the first terminal.

In step S2209, the first network element transmits the ranging result of the first terminal relative to the second terminal or the positioning result of the first terminal to the third network element.

In some embodiments, the first network element may transmit the ranging result of the first terminal relative to the second terminal or the positioning result of the first terminal to the third network element via the second network element.

In some embodiments, the first network element transmits the ranging result of the first terminal relative to the second terminal or the positioning result of the first terminal to the second network element.

In some embodiments, the second network element receives the ranging result of the first terminal relative to the second terminal or the positioning result of the first terminal transmitted by the first network element.

In some embodiments, the second network element transmits the ranging result of the first terminal relative to the second terminal or the positioning result of the first terminal to the third network element.

In step S2210, the third network element receives the ranging result of the first terminal relative to the second terminal or the positioning result of the first terminal transmitted by the first network element.

For descriptions of steps S2208, S2209, and S2210, reference may be made to the embodiments shown in FIG. 2a, and details are not repeated here.

The ranging or positioning method involved in embodiments of the present disclosure may include at least one of steps S2201 to S2210. For example, step S2201 may be implemented as an independent embodiment, step S2202 may be implemented as an independent embodiment, and so on. For another example, steps S2201+S2202 may be implemented as an independent embodiment, steps S2201+S2202+S2203 may be implemented as an independent embodiment, and so on, but the present disclosure is not limited to this.

FIG. 3a is a schematic flowchart of a ranging or positioning method according to an embodiment of the present disclosure. As shown in FIG. 3a, embodiments of the present disclosure relate to a ranging or positioning method. The method is performed by a first network element, and includes the following steps.

In step S3101, group discovery information is transmitted to a first terminal, where the group discovery information indicates that a second terminal belongs to a first terminal group, and the second terminal is used for ranging or positioning of the first terminal.

For a detailed description of step S3101, reference may be made to the embodiments in FIG. 2 above.

In this embodiment, the first network element may transmit the group discovery information to the first terminal, where the group discovery information indicates that the second terminal belongs to the first terminal group, and the second terminal is used for ranging or positioning of the first terminal. Thus, the first network element may promptly indicate the group discovery information to the first terminal, enabling ranging or positioning of the first terminal based on the second terminal in the first terminal group.

FIG. 3b is a schematic flowchart of a ranging or positioning method according to an embodiment of the present disclosure. As shown in FIG. 3b, embodiments of the present disclosure relate to a ranging or positioning method. The method is performed by a first network element, and includes the following steps.

In step S3201, first information transmitted by a second network element is received, where the first information indicates group discovery information, the group discovery information indicates that a second terminal belongs to a first terminal group, and the second terminal is used for ranging or positioning of a first terminal.

In step S3202, the group discovery information is transmitted to a first terminal.

In step S3203, second information transmitted by the first terminal is received, where the second information indicates positioning assistance data, and the positioning assistance data is reference data for performing ranging or positioning on the first terminal.

In step S3204, a ranging result of the first terminal relative to the second terminal or a positioning result of the first terminal is determined according to the positioning assistance data and a positioning result of the second terminal.

In step S3205, the ranging result of the first terminal relative to the second terminal or the positioning result of the first terminal is transmitted to the second network element.

For a detailed description of steps S3201-S3205, reference may be made to the embodiments in FIG. 2 above.

The ranging or positioning method involved in embodiments of the present disclosure may include at least one of steps S3201-S3205. For example, step S3201 may be implemented as an independent embodiment, step S3202 may be implemented as an independent embodiment, and so on. For another example, steps S3201+S3202 may be implemented as an independent embodiment, steps S3201+S3202+S3203 may be implemented as an independent embodiment, and so on, but the present disclosure is not limited to this.

Thus, in this embodiment, the first network element may receive the first information transmitted by the second network element, where the first information indicates the group discovery information, the group discovery information indicates that the second terminal belongs to the first terminal group, and the second terminal is used for ranging or positioning of the first terminal; the first network element may transmit the group discovery information to the first terminal, and receive the second information transmitted by the first terminal, where the second information indicates the positioning assistance data, and the positioning assistance data is reference data for ranging or positioning the first terminal; the first network element may determine the ranging result of the first terminal relative to the second terminal or the positioning result of the first terminal according to the positioning assistance data and the positioning result of the second terminal; and the first network element may transmit the ranging result of the first terminal relative to the second terminal or the positioning result of the first terminal to the second network element, so that the first network element may promptly obtain the group discovery information and indicate the group discovery information to the first terminal, thus enabling ranging or positioning of the first terminal based on the second terminal in the first terminal group, and ensuring that the ranging or positioning result may be effectively executed.

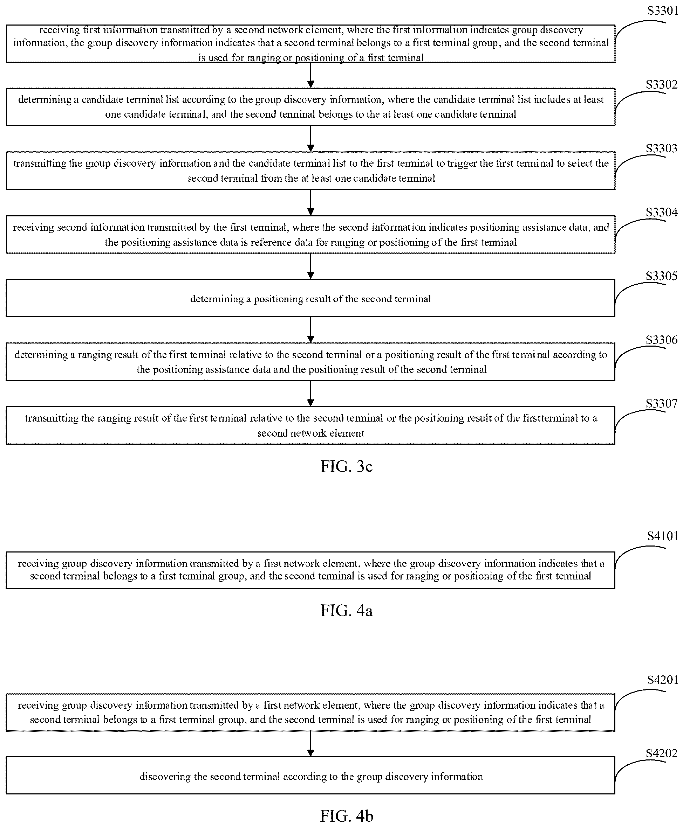

FIG. 3c is a schematic flowchart of a ranging or positioning method according to an embodiment of the present disclosure. As shown in FIG. 3c, embodiments of the present disclosure relate to a ranging or positioning method. The method is performed by a first network element, and includes the following steps.

In step S3301, first information transmitted by a second network element is received, where the first information indicates group discovery information, the group discovery information indicates that a second terminal belongs to a first terminal group, and the second terminal is used for ranging or positioning of a first terminal.

In step S3302, a candidate terminal list is determined according to the group discovery information, where the candidate terminal list includes at least one candidate terminal, and the second terminal belongs to the at least one candidate terminal.

In step S3303, the group discovery information and the candidate terminal list are transmitted to the first terminal to trigger the first terminal to select the second terminal from the at least one candidate terminal.

In step S3304, second information transmitted by the first terminal is received, where the second information indicates positioning assistance data, and the positioning assistance data is reference data for performing ranging or positioning on the first terminal.

In step S3305, a positioning result of the second terminal is determined.

In step S3306, a ranging result of the first terminal relative to the second terminal or a positioning result of the first terminal is determined according to the positioning assistance data and the positioning result of the second terminal.

In step S3307, the ranging result of the first terminal relative to the second terminal or the positioning result of the first terminal is transmitted to a second network element.

For a detailed description of steps S3301-S3307, reference may be made to the embodiments in FIG. 2 above.

The ranging or positioning method involved in embodiments of the present disclosure may include at least one of steps S3301-S3307. For example, step S3301 may be implemented as an independent embodiment, step S3302 may be implemented as an independent embodiment, and so on. For another example, steps S3301+S3302 may be implemented as an independent embodiment, steps S3301+S3302+S3303 may be implemented as an independent embodiment, and so on, but the present disclosure is not limited to this.

Thus, the first network element may also determine the candidate terminal list based on the group discovery information indicated by the second network element, where the candidate terminal list includes at least one candidate terminal, and transmit the candidate terminal list to the first terminal, so that the first terminal selects the second terminal from the at least one candidate terminal. Therefore, the first network element may promptly obtain the group discovery information and promptly indicate the candidate terminal list determined based on the group discovery information to the first terminal, so as to support the first terminal in discovering the second terminal within the specified candidate terminal list. This not only may support a timely and effective execution of the ranging or positioning procedure, but also may effectively apply to personalized ranging or positioning scenarios.

FIG. 4a is a schematic flowchart of a ranging or positioning method according to an embodiment of the present disclosure. As shown in FIG. 4a, embodiments of the present disclosure relate to a ranging or positioning method. The method is performed by a first terminal, and includes the following steps.

In step S4101, group discovery information transmitted by a first network element is received, where the group discovery information indicates that a second terminal belongs to a first terminal group, and the second terminal is used for ranging or positioning of the first terminal.

In some embodiments, the first terminal may be, for example, a terminal being or to be ranged or positioned, and the first terminal may also be called a target terminal.

In some embodiments, the first terminal may receive the group discovery information transmitted by the first network element to specify that the second terminal belongs to the first terminal group.

In some embodiments, the target terminal may receive the group discovery information transmitted by an LMF network element to specify that a located terminal belongs to the first terminal group.

For a detailed description of step S4101, reference may be made to the embodiments in FIG. 2 above.

In this embodiment, the first terminal may receive the group discovery information transmitted by the first network element, the group discovery information indicates that the second terminal belongs to the first terminal group, and the second terminal is used for ranging or positioning of the first terminal. Thus, the first terminal may promptly obtain the group discovery information indicated by the second network element, thereby enabling ranging or positioning of the first terminal based on the second terminal in the first terminal group.

FIG. 4b is a schematic flowchart of a ranging or positioning method according to an embodiment of the present disclosure. As shown in FIG. 4b, embodiments of the present disclosure relate to a ranging or positioning method. The method is performed by a first terminal, and includes the following steps.

In step S4201, group discovery information transmitted by a first network element is received, the group discovery information indicates that a second terminal belongs to a first terminal group, and the second terminal is used for ranging or positioning of the first terminal.

In step S4202, the second terminal is discovered according to the group discovery information.

In some embodiments, the first terminal may discover the second terminal with reference to the group discovery information.

In some embodiments, the first terminal may also select the second terminal from at least one candidate terminal related to the group discovery information.

For a detailed description of steps S4201-S4202, reference may be made to the embodiments in FIG. 2 above.

The ranging or positioning method involved in embodiments of the present disclosure may include at least one of steps S4201-S4202. For example, step S4201 may be implemented as an independent embodiment, step S4202 may be implemented as an independent embodiment, and so on. For another example, steps S4201+S4202 may be implemented as an independent embodiment, and so on, but the present disclosure is not limited to this.

In this embodiment, the first terminal may receive the group discovery information transmitted by the first network element, and discover the second terminal according to the group discovery information, where the group discovery information indicates that the second terminal belongs to the first terminal group, and the second terminal is used for ranging or positioning of the first terminal. This achieves timely acquisition of the group discovery information and discovery of the second terminal in the first terminal group based on the group discovery information, so as to support the effective execution of the ranging or positioning procedure.

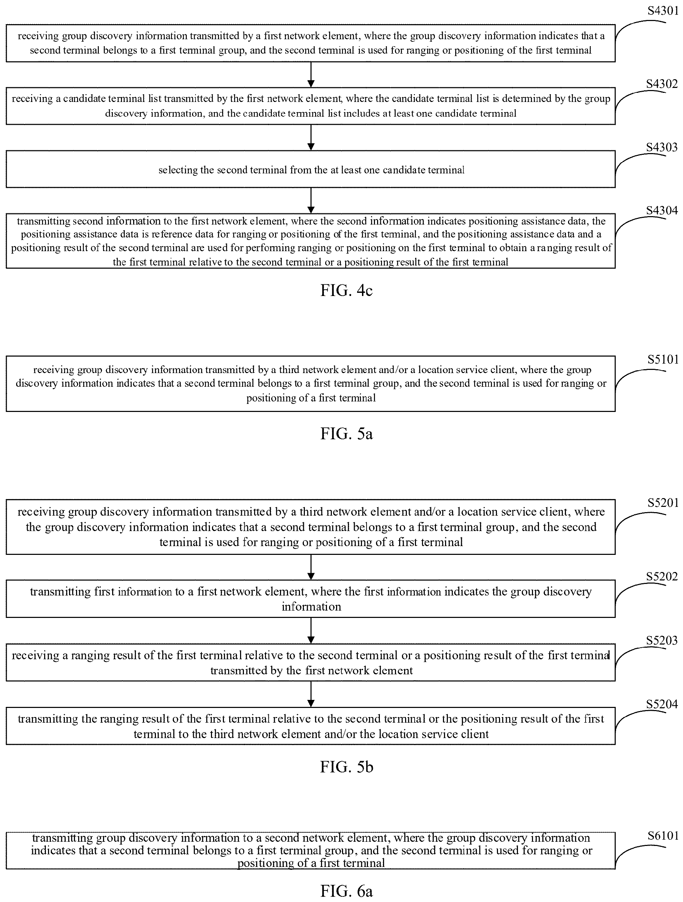

FIG. 4c is a schematic flowchart of a ranging or positioning method according to an embodiment of the present disclosure. As shown in FIG. 4c, embodiments of the present disclosure relate to a ranging or positioning method. The method is performed by a first terminal, and includes the following steps.

In step S4301, group discovery information transmitted by a first network element is received, the group discovery information indicates that a second terminal belongs to a first terminal group, and the second terminal is used for ranging or positioning of the first terminal.

In step S4302, a candidate terminal list transmitted by the first network element is received, the candidate terminal list is determined by the group discovery information, and the candidate terminal list includes at least one candidate terminal.

In step S4303, the second terminal is selected from the at least one candidate terminal.

In step S4304, second information is transmitted to the first network element, where the second information indicates positioning assistance data, the positioning assistance data is reference data for performing ranging or positioning on the first terminal, and the positioning assistance data and a positioning result of the second terminal are used for ranging or positioning the first terminal to obtain a ranging result of the first terminal relative to the second terminal or a positioning result of the first terminal.

For a detailed description of steps S4301-S4304, reference may be made to the embodiments in FIG. 2 above.

The ranging or positioning method involved in embodiments of the present disclosure may include at least one of steps S4301-S4304. For example, step S4301 may be implemented as an independent embodiment, step S4302 may be implemented as an independent embodiment, and so on. For another example, steps S4301+S4302 may be implemented as an independent embodiment, steps S4301+S4302+S4303 may be implemented as an independent embodiment, and so on, but the present disclosure is not limited to this.

In this embodiment, the first terminal may receive the group discovery information transmitted by the first network element, where the group discovery information indicates that the second terminal belongs to the first terminal group, and the second terminal is used for ranging or positioning of the first terminal; receive the candidate terminal list determined and transmitted by the first network element according to the group discovery information, where the candidate terminal list includes at least one candidate terminal; select the second terminal from the at least one candidate terminal; and transmit the positioning assistance data to the first network element, where the positioning assistance data is reference data for performing ranging or positioning on the first terminal, and the positioning assistance data and the positioning result of the second terminal are used for ranging or positioning the first terminal to obtain the ranging result of the first terminal relative to the second terminal or the positioning result of the first terminal. This enables timely acquisition of the group discovery information, discovery of the second terminal within the specified candidate terminal list, and generation of the positioning assistance data. The positioning assistance data and the positioning result of the second terminal may be used to support the effective execution of a network-assisted ranging or positioning procedure.

FIG. 5a is a schematic flowchart of a ranging or positioning method according to an embodiment of the present disclosure. As shown in FIG. 5a, embodiments of the present disclosure relate to a ranging or positioning method. The method is performed by a second network element, and includes the following steps.

In step S5101, group discovery information transmitted by a third network element and/or a location service client is received, where the group discovery information indicates that a second terminal belongs to a first terminal group, and the second terminal is used for ranging or positioning of a first terminal.

For a detailed description of step S5101, reference may be made to the embodiments in FIG. 2 above.

In this embodiment, the second network element may receive the group discovery information transmitted by the third network element and/or the location service client, the group discovery information indicates that the second terminal belongs to the first terminal group, and the second terminal is used for ranging or positioning of the first terminal. Thus, the second network element may promptly obtain the group discovery information indicated by the third network element and/or the location service client, thus enabling ranging or positioning of the first terminal based on the second terminal in the first terminal group.

FIG. 5b is a schematic flowchart of a ranging or positioning method according to an embodiment of the present disclosure. As shown in FIG. 5b, embodiments of the present disclosure relates to a ranging or positioning method. The method is performed by a second network element, and includes the following steps.

In step S5201, group discovery information transmitted by a third network element and/or a location service client is received, where the group discovery information indicates that a second terminal belongs to a first terminal group, and the second terminal is used for ranging or positioning of a first terminal.

In step S5202, first information is transmitted to a first network element, where the first information indicates the group discovery information.

In step S5203, a ranging result of the first terminal relative to the second terminal or a positioning result of the first terminal transmitted by the first network element is received.

In step S5204, the ranging result of the first terminal relative to the second terminal or the positioning result of the first terminal is transmitted to the third network element and/or the location service client.

For a detailed description of steps S5201-S5204, reference may be made to the embodiments in FIG. 2 above.

The ranging or positioning method involved in embodiments of the present disclosure may include at least one of steps S5201-S5204. For example, step S5201 may be implemented as an independent embodiment, step S5202 may be implemented as an independent embodiment, and so on. For another example, steps S5201+S5202 may be implemented as an independent embodiment, steps S5201+S5202+S5203 may be implemented as an independent embodiment, and so on, but the present disclosure is not limited to this.

In this embodiment, the second network element may receive the group discovery information transmitted by the third network element and/or the location service client, where the group discovery information indicates that the second terminal belongs to the first terminal group, and the second terminal is used for ranging or positioning of the first terminal; transmit the first information to the first network element, where the first information indicates the group discovery information; receive the ranging result of the first terminal relative to the second terminal or the positioning result of the first terminal transmitted by the first network element; and transmit the ranging result of the first terminal relative to the second terminal or the positioning result of the first terminal to the third network element and/or the location service client. Thus, the second network element may promptly obtain the group discovery information indicated by the third network element and/or the location service client and promptly indicate the group discovery information to the first network element. The group discovery information may be used for the first network element or the first terminal to discover the second terminal in the first terminal group, so as to support the effective execution of the ranging or positioning procedure. The second network element may also promptly indicate the ranging result of the first terminal relative to the second terminal or the positioning result of the first terminal to the third network element and/or the location service client.

FIG. 6a is a schematic flowchart of a ranging or positioning method according to an embodiment of the present disclosure. As shown in FIG. 6a, embodiments of the present disclosure relate to a ranging or positioning method. The method is performed by a third network element and/or a location service client, and includes the following steps.

In step S6101, group discovery information is transmitted to a second network element, where the group discovery information indicates that a second terminal belongs to a first terminal group, and the second terminal is used for ranging or positioning of a first terminal.

For a detailed description of step S6101, reference may be made to the embodiments in FIG. 2 above.

In this embodiment, the third network element and/or the location service client may transmit the group discovery information to the second network element, the group discovery information indicates that the second terminal belongs to the first terminal group, and the second terminal is used for ranging or positioning of the first terminal. Thus, the second network element may promptly obtain the group discovery information indicated by the third network element and/or the location service client, thus enabling ranging or positioning of the first terminal based on the second terminal in the first terminal group.

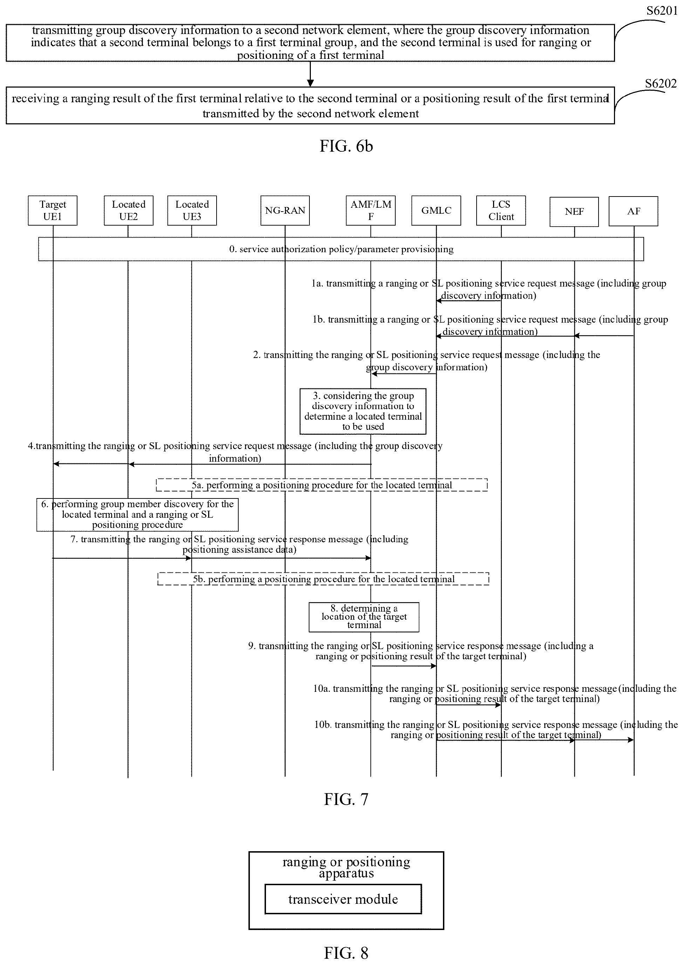

FIG. 6b is a schematic flowchart of a ranging or positioning method according to an embodiment of the present disclosure. As shown in FIG. 6b, embodiments of the present disclosure relates to a ranging or positioning method. The method is performed by a third network element and/or a location service client, and includes the following steps.

In step S6201, group discovery information is transmitted to a second network element, where the group discovery information indicates that a second terminal belongs to a first terminal group, and the second terminal is used for ranging or positioning of a first terminal.

In step S6202, a ranging result of the first terminal relative to the second terminal or a positioning result of the first terminal transmitted by the second network element is received.

For a detailed description of steps S6201-S6202, reference may be made to the embodiments in FIG. 2 above.

The ranging or positioning method involved in embodiments of the present disclosure may include at least one of steps S6201-S6202. For example, step S6201 may be implemented as an independent embodiment, step S6202 may be implemented as an independent embodiment, and so on. For another example, steps S6201+S6202 may be implemented as an independent embodiment, and so on, but the present disclosure is not limited to this.

In this embodiment, the third network element and/or the location service client may transmit the group discovery information to the second network element, and receive the ranging result of the first terminal relative to the second terminal or the positioning result of the first terminal transmitted by the second network element, where the group discovery information indicates that the second terminal belongs to the first terminal group, and the second terminal is used for ranging or positioning of the first terminal. Thus, the second network element may promptly obtain the group discovery information indicated by the third network element and/or the location service client, thus enabling ranging or positioning of the first terminal based on the second terminal in the first terminal group, and the third network element and/or the location service client may promptly obtain the ranging result of the first terminal relative to the second terminal or the positioning result of the first terminal.

In the various embodiments of FIGS. 3a-3c, the various embodiments of FIGS. 4a-4c, the various embodiments of FIGS. 5a-5b, and the various embodiments of FIGS. 6a-6b, the group discovery information is further configured to identify the first terminal group, and/or configured to indicate that the first terminal belongs to the first terminal group.

In the various embodiments of FIGS. 3a-3c, the various embodiments of FIGS. 4a-4c, the various embodiments of FIGS. 5a-5b, and the various embodiments of FIGS. 6a-6b, the group discovery information includes at least one of: first information, second information, third information, and fourth information. The first information is configured to identify the information of the first terminal group, the second information indicates that the second terminal needs to be in the first terminal group, the third information indicates that the first terminal and the second terminal need to be in the same terminal group, and the fourth information indicates that the first terminal and the second terminal need to be in the first terminal group, thereby effectively improving the comprehensiveness of the indication of the group discovery information, so as to support accurate discovery of the second terminal used for ranging or positioning of the first terminal.

In the various embodiments of FIGS. 3a-3c, the various embodiments of FIGS. 4a-4c, the various embodiments of FIGS. 5a-5b, and the various embodiments of FIGS. 6a-6b, the first information may be configured to identify a specified terminal group (e.g., the first terminal group); the second information may indicate that the second terminal may be in the first terminal group; the third information may indicate that the first terminal and the second terminal may be in the same terminal group, and in this case, this terminal group where the first terminal and the second terminal are located may be or may not be the first terminal group indicated by the first information; and the fourth information may indicate that the first terminal and the second terminal may be in the first terminal group, which are not limited herein.

In this implementation or embodiment, in case of no conflict, each step may be implemented independently, combined arbitrarily, or exchanged in order. Optional implementations or examples may be arbitrarily combined and may be arbitrarily combined with any steps in other implementations or embodiments.

The following is an illustrative description of the above methods.

### Optional embodiment

FIG. 7 is a schematic flowchart of a ranging or positioning method according to an embodiment of the present disclosure. This method illustrates an interaction diagram among a first terminal, a first network element, a second network element, a third network element, and a location service client. Taking an example that the first terminal is target UE1, the first network element is an LMF network element, the second network element is a GMLC network element, the third network element is an AF network element or an NEF network element, and the location service client is abbreviated as an LCS client, the interaction procedure may involve located UE2, located UE3, and a next generation radio access network (NG-RAN). The located UE2 and/or the located UE3 may be, for example, an optional example of a second terminal, which is not limited herein.

In embodiments of the present disclosure, for network-assisted sidelink positioning, the methods provided in the above embodiments may be used to consider group discovery information to select a terminal to be referenced for performing ranging or positioning on the first terminal. A ranging or SL positioning procedure may be performed based on a terminal determined from a specified terminal group. For example, a located terminal in the specified terminal group may be used for the network-assisted sidelink positioning. Discovery of the located terminal may also be applied to situations where a NAS connection between a target terminal (an optional example of the first terminal) and the network is available or unavailable. In the following steps, the ranging or SL positioning procedure may be triggered by the network.

In step 0, a service authorization policy/parameter is provisioned.

In some embodiments, the service authorization policy/parameter is provisioned, i.e., service authorization policy/parameter provisioning, which is not limited herein.

In some embodiments, during this procedure, group discovery information configured for a terminal may be stored on a network side.

In some embodiments, the service authorization policy/parameter may be provided to target UE1 and one or more potential located terminals (e.g., located UE2 and/or located UE3), which is not limited herein.

In some embodiments, the group discovery information may be configured through an application layer or the network. The related group discovery information may be stored in the network, for example, in a UDR network element/UDM network element. A related group identifier (ID) is associated with terminal subscription data and stored as part of the terminal subscription data.

In step 1a, a ranging or SL positioning service request message (including the group discovery information) is transmitted.

In some embodiments, the LCS client may transmit the ranging or SL positioning service request message to the GMLC network element.

In step 1b, a ranging or SL positioning service request message (including the group discovery information) is transmitted.

In some embodiments, the AF network element may transmit the ranging or SL positioning service request message to the GMLC network element.

In some embodiments, the AF network element may transmit the ranging or SL positioning service request message to the GMLC network element via the NEF network element.

In some embodiments, the group discovery information may be, for example, denoted as group discovery information.

In some embodiments, the ranging or SL positioning service request message may be, for example, a ranging/SL positioning service request, and the ranging/SL positioning service request may include the group discovery information.

In some embodiments, the LCS client or the AF network element may transmit the ranging or SL positioning service request message for ranging or SL positioning of the target terminal (through the NEF network element), the ranging or SL positioning service request message may include the group discovery information, to indicate that the terminal in the specified terminal group is used in this procedure, where the group discovery information may include a specified terminal group ID; and/or indicate that the terminal selected for this procedure may be in the specified terminal group, and the target terminal may be unrelated to any terminal group; or indicate that the located terminal selected for this procedure is in the same terminal group as the target terminal.

In some embodiments, the located terminal is, for example, the located UE2 and/or the located UE3 mentioned above, and the target terminal is, for example, the target UE1 mentioned above, which is not limited herein.

In step 2, the ranging or SL positioning service request message (including the group discovery information) is transmitted.

In some embodiments, the GMLC network element may transmit the ranging or SL positioning service request message (including the group discovery information) to the LMF network element.

In some embodiments, the GMLC network element may transmit the ranging or SL positioning service request message (including the group discovery information) to the AMF network element.

In step 3, the group discovery information is considered to determine the located terminal to be used

In some embodiments, the AMF network element or the LMF network element may determine the located terminal according to the group discovery information, and the located terminal may be selected and determined based on one or more of existing functions such as area of interest location information, information configured for the terminal, QoS required for positioning, or together with the group discovery information and one or more of the above existing function examples. A terminal group to which the determined located terminal belongs may be the same as or different from a terminal group to which the target terminal belongs.

In some embodiments, the AMF network element or the LMF network element may also perform UE LMF selection and UE privacy check, which is not limited herein.

In step 4, the ranging or SL positioning service request message (including the group discovery information) is transmitted.

In some embodiments, the AMF network element or the LMF network element may also transmit the ranging or SL positioning service request message to the target terminal (e.g., target UE1), and the group discovery information may be included in the ranging or SL positioning service request message.

In some embodiments, in a case that the AMF network element or the LMF network element discovers the located terminal based on the group discovery information, information of the located terminal may also be indicated to the target terminal, which is not limited herein.

In some embodiments, the LMF network element may transmit the ranging or SL positioning service request message to the target UE1 via the AMF network element, and the ranging or SL positioning service request message may include the group discovery information and/or the information of the located terminal determined in step 3, which is not limited herein.

In step 5a, a positioning procedure for the located terminal is performed.

In some embodiments, the positioning procedure for the located terminal may be, for example, a located UEs positioning procedure.

In step 6, group member discovery for the located terminal and the ranging or SL positioning procedure are performed.

In some embodiments, the target UE1 may perform the group member discovery for the located terminal (e.g., located UE2 and/or located UE3) based on the group discovery information received in step 4, and perform the ranging/SL positioning procedure together with the located terminal to perform measurements and calculate results using LPP or SLPP.

In some embodiments, in a case that the target UE1 does not receive the information of the located terminal (e.g., the information of the second terminal transmitted by the LMF network element), the target UE1 may also perform the group member discovery based on the received group discovery information, to discover a located terminal that may be used.

In some embodiments, the target UE1 may transmit information of the discovered located terminal to the network side for further checks, such as a privacy check, and performing the ranging or positioning procedure.

In step 7, the ranging or SL positioning service response message (including the positioning assistance data) is transmitted.

In some embodiments, the ranging or SL positioning service response message may be, for example, a ranging/SL positioning service response, and the ranging/SL positioning service response may include the positioning assistance data.

In some embodiments, the ranging or SL positioning service response message may also include the information of the located terminal, which is not limited herein.

In some embodiments, the target UE1 may transmit the positioning assistance data and information of a related located terminal (e.g., 5G globally unique temporary UE identity (GUTI)), which is not limited herein.

In some embodiments, step 5b may also be performed after step 7.

In step 5b, a positioning procedure for the located terminal is performed.

In some embodiments, the positioning procedure for the located terminal may be, for example, a located UEs positioning procedure.

In some embodiments, a location of the selected located terminal may be retrieved through some mechanisms (e.g., an MT-LR procedure), which may be performed in step 5a after determining the located terminal, or in step 5b after retrieving the positioning assistance data between the target UE1 and the located terminal, which is not limited herein.

In step 8, a location of the target terminal is determined.

In some embodiments, a location of the target UE1 may be determined.

In some embodiments, the LMF network element may determine the location of the target terminal based on the positioning assistance data for ranging/SL positioning and the location of the located terminal determined in step 5a or step 5b.

In step 9, the ranging or SL positioning service response message (including a ranging or positioning result of the target terminal) is transmitted.

In some embodiments, the ranging or positioning result of the target terminal includes a ranging result of the target terminal relative to the located terminal or a positioning result of the target terminal.

In some embodiments, the LMF network element may transmit the ranging or positioning result of the target terminal to the GMLC network element.

In some embodiments, the LMF network element may transmit the ranging or SL positioning service response message to the GMLC network element, and the ranging or positioning result of the target terminal may be carried in the ranging or SL positioning service response message to indicate the ranging or positioning result of the target terminal to the GMLC network element.

In step 10a, the ranging or SL positioning service response message (including the ranging or positioning result of the target terminal) is transmitted.

In some embodiments, the GMLC network element may transmit the ranging or positioning result of the target terminal to the LCS client.

In some embodiments, the GMLC network element may transmit the ranging or SL positioning service response message to the LCS client, and the ranging or positioning result of the target terminal may be carried in the ranging or SL positioning service response message to indicate the ranging or positioning result of the target terminal to the LCS client.

In step 10b, the ranging or SL positioning service response message (including the ranging or positioning result of the target terminal) is transmitted.

In some embodiments, the GMLC network element may transmit the ranging or positioning result of the target terminal to the AF network element (via the NEF network element).

In some embodiments, the GMLC network element may transmit the ranging or SL positioning service response message to the AF network element (via the NEF network element), and the ranging or positioning result of the target terminal may be carried in the ranging or SL positioning service response message to indicate the ranging or positioning result of the target terminal to the LCS client.

In some embodiments, the ranging or positioning result of the target terminal may be transmitted to the LCS client or the AF network element (through the NEF network element).

In some embodiments, for a ranging/SL positioning service through a 5GC network, the UE may also trigger an MO-LR procedure to interact with the LMF for ranging/SL positioning, and discovery of a related terminal may also be performed according to the method provided above.

In some embodiments, the ranging/positioning service may be performed based on a reference terminal and/or an assistance terminal and/or a server terminal.

In some embodiments, in a case that the ranging/positioning service is performed based on the reference terminal and/or the assistance terminal and/or the server terminal, the discovery of the related terminal may also be performed according to the method provided above.

In some embodiments, for the procedure of the ranging/SL positioning service exposure through the 5GC network, the reference terminal and/or the assistance terminal and/or the server terminal may also be determined according to the group discovery information.

In some embodiments, for the ranging/SL positioning service or exposure service through the 5GC network, the server terminal may provide positioning method determination, assistance data distribution, and/or location calculation. The server terminal may be on the same terminal as other terminals or on an independent terminal. For location calculation, such as location calculation of the target terminal, the server terminal may further complete the location calculation of the target terminal by obtaining location information of the target terminal and the located terminal and/or the reference terminal and/or the assistance terminal.

Embodiments of the present disclosure also propose an apparatus configured to perform any one of the above methods. For example, an apparatus is proposed, which includes a unit or a module configured to perform the steps performed by the terminal in any one of the above methods. As another example, another apparatus is proposed, which includes a unit or a module configured to perform the steps performed by the network device (e.g., an access network device, a core network function node, a core network device, etc.) in any one of the above methods.

FIG. 8 is a schematic diagram of a ranging or positioning apparatus according to an embodiment of the present disclosure. As shown in FIG. 8, the ranging or positioning apparatus includes: a transceiver module, configured to transmit group discovery information to a first terminal, where the group discovery information indicates that a second terminal belongs to a first terminal group, and the second terminal is used for ranging or positioning of the first terminal; or configured to receive group discovery information transmitted by a first network element, where the group discovery information indicates that a second terminal belongs to a first terminal group, and the second terminal is used for ranging or positioning of a first terminal; or configured to receive group discovery information transmitted by a third network element and/or a location service client, where the group discovery information indicates that a second terminal belongs to a first terminal group, and the second terminal is used for ranging or positioning of a first terminal; or configured to transmit group discovery information to a second network element, where the group discovery information indicates that a second terminal belongs to a first terminal group, and the second terminal is used for ranging or positioning of a first terminal.

Optionally, the transceiver module is configured to execute the relevant steps executed by the first network element in any one of the above methods, which is not be repeated here.

Optionally, the ranging or positioning apparatus further includes at least one of a transmitting module and a receiving module. The transmitting module is configured to execute the transmitting-related steps executed by the first network element in any one of the above methods, and the receiving module is configured to execute the receiving-related steps executed by the first network element in any one of the above methods, which will not be repeated here.

It should be understood that the division of units or modules in the above apparatus is only a division of logical functions. In actual implementation, they may be fully or partially integrated into one physical entity, or may be physically separated. In addition, the units or modules in the apparatus may be implemented in the form of processor calling software. For example, the apparatus includes a processor, the processor is connected to a memory, the memory stores instructions, and the processor calls the instructions stored in the memory to implement any one of the above methods or the functions of the units or modules of the above apparatus. The processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of a hardware circuit. The functions of some or all units or modules may be implemented by designing the hardware circuit. The hardware circuit may be understood as one or more processors. For example, in an implementation, the hardware circuit is an application-specific integrated circuit (ASIC), and the functions of some or all units or modules above are implemented by designing a logical relationship of components in the circuit. As another example, in another implementation, the hardware circuit may be implemented by a programmable logic device (PLD). Taking a field programmable gate array (FPGA) as an example, it may include a large number of logic gate circuits, and a connection relationship between the logic gate circuits is configured through configuration files, thereby implementing the functions of some or all units or modules above. All units or modules of the above apparatus may be fully implemented in the form of processor calling software, or fully implemented in the form of the hardware circuit, or partially implemented in the form of processor calling software and partially implemented in the form of the hardware circuit.

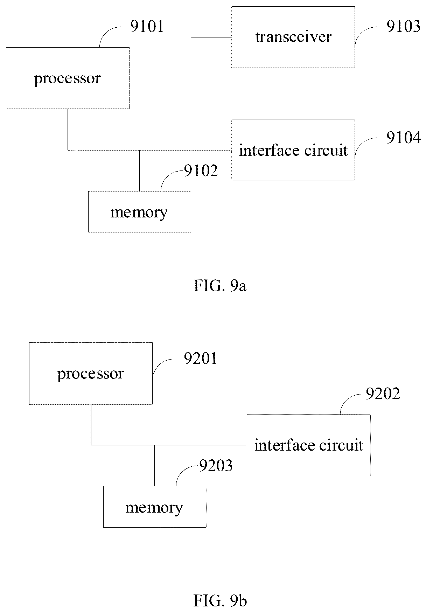

As shown in FIG. 9a, a communication device 9100 includes one or more processors 9101. The one or more processors 9101 may be a general-purpose processor or a special-purpose processor, etc., for example, it may be a baseband processor or a central processing unit. The baseband processor may be configured to process a communication protocol and communication data, and the central processor may be configured to control a communication device (e.g., a base station, a baseband chip, a terminal, a terminal chip, a DU or CU, etc.), to execute a program, and process data of the program. The one or more processors 9101 are configured to call instructions to cause the communication device 9100 to perform any one of the above methods.

In some embodiments, the communication device 9100 further includes one or more memories 9102 configured to store instructions. Optionally, all or part of the one or more memories 9102 may also be located outside the communication device 9100.

In some embodiments, the communication device 9100 further includes one or more transceivers 9103. In a case that the communication device 9100 includes one or more transceivers 9103, communication steps such as transmitting steps and receiving steps in the above methods are performed by the transceivers 9103, and other steps are performed by the processor 9101.

In some embodiments, the transceiver may include a receiver and a transmitter, and the receiver and the transmitter may be separate or integrated together. Optionally, terms such as transceiver, transceiver unit, transceiver machine, and transceiver circuit may be used interchangeably; terms such as transmitter, transmitting unit, transmitting machine, and transmitting circuit may be used interchangeably; and terms such as receiver, receiving unit, receiving machine, and receiving circuit may be used interchangeably.

Optionally, the communication device 9100 further includes one or more interface circuits 9104. The interface circuits 9104 are connected to the memory 9102, may be used to receive signals from the memory 9102 or other devices, and may be used to send signals to the memory 9102 or other devices. For example, the interface circuit 9104 may read the instructions stored in the memory 9102 and send the instructions to the processor 9101.

The communication device 9100 described in the above embodiments may be a network device or a terminal, but the scope of the communication device 9100 described in the present disclosure is not limited thereto. A structure of the communication device 9100 may not be limited by FIG. 9a. The communication device may be a stand-alone device or may be a part of a large device. For example, the communication device may be: 1) an independent integrated circuit (IC), or a chip, or a chip system or subsystem; 2) a set of one or more ICs, optionally, the set of ICs may also include a storage component for storing data and programs; 3) an ASIC, such as a modem; 4) a module that may be embedded in other devices; 5) a receiver, a terminal, a smart terminal, a cellular phone, a wireless device, a handset, a mobile unit, a vehicle-mounted device, a network device, a cloud device, an artificial intelligence device, etc.; 6) others, etc.

FIG 9b is a schematic diagram of a chip 9200 according to an embodiment of the present disclosure. In a case that the communication device 9100 may be a chip or a chip system, reference may be made to the schematic diagram of the chip 9200 shown in FIG. 9b, but the present disclosure is not limited thereto.

The chip 9200 includes one or more processors 9201. The one or more processors 9201 are configured to call instructions to cause the chip 9200 to perform any one of the above methods.

In some embodiments, the chip 9200 further includes one or more interface circuits 9202. The interface circuit 9202 is connected to a memory 9203, may be used to receive signals from the memory 9203 or other devices, and may be configured to send signals to the memory 9203 or other devices. For example, the one or more interface circuits 9202 may read instructions stored in the memory 9203 and send the instructions to the processor 9201. Optionally, terms such as interface circuit, interface, transceiver pin, and transceiver may be used interchangeably.

In some embodiments, the chip 9200 further includes one or more memories 9203 for storing instructions. Optionally, all or part of the one or more memories 9203 may be located outside the chip 9200.

The present disclosure further proposes a storage medium. Instructions are stored on the storage medium. The instructions, when run on the communication device 9100, are configured to cause the communication device 9100 to perform any one of the above methods. Optionally, the storage medium is an electronic storage medium. Optionally, the storage medium is a computer-readable storage medium, but it is not limited thereto, and it may also be a storage medium readable by other devices. Optionally, the storage medium may be a non-transitory storage medium, but it is not limited thereto, and it may also be a transitory storage medium.

In the embodiments of the present disclosure, a processor is a circuit with a signal processing capability. In an implementation, the processor may be a circuit with a capability to read and run instructions, such as a central processing unit (CPU), a microprocessor, a graphics processing unit (GPU) (which may be understood as a microprocessor), or a digital signal processor (DSP), etc. In another implementation, the processor may implement certain functions through a logical relationship of a hardware circuit. The logical relationship of the hardware circuit is fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, a process of the processor loading configuration files to implement hardware circuit configuration may be understood as a process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

The present disclosure further proposes a program product. The program product, when executed by a communication device 9100, is configured to cause the communication device 9100 to perform any one of the above methods. Optionally, the program product is a computer program product.

The present disclosure further proposes a computer program. The computer program, when runs on a computer, is configured to cause the computer to perform any one of the above methods.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable devices. The computer program may be stored in a computer-readable storage medium or transmitted from one computer-readable storage medium to another. For example, the computer program may be transmitted from a website, computer, server, or data center to another website, computer, server, or data center in a wire (such as a coaxial cable, a fiber optic, a digital subscriber line (DSL)) or wireless (such as infrared, wireless, microwave) manner. The computer-readable storage medium may be any available medium that may be accessed by a computer or a data storage device such as a data center and a server that integrates one or more available media. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the related art may realize that the units and algorithm steps of the examples described with reference to the embodiments of the present disclosure may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, for a specific working process of a system, an apparatus and a unit described above reference may be made to a corresponding process in the above method embodiments, and details will not be repeated here.

The above are only implementations of the present disclosure. However, the protection scope of the present disclosure is not limited thereto. Changes or substitutions that may be easily considered by those skilled in the art shall be contained within the protection scope of the present disclosure. Therefore, the protection scope of the present disclosure shall be subject to the protection scope of claims.

## Claims

1. A ranging or positioning method, comprising:
transmitting group discovery information to a first terminal, wherein the group discovery information indicates that a second terminal belongs to a first terminal group, and the second terminal is used for ranging or positioning of the first terminal.

2. The method according to claim 1, wherein the group discovery information is further configured to identify the first terminal group, and/or the group discovery information indicates that the first terminal belongs to the first terminal group.

3. The method according to any one of claims 1 to 2, wherein the group discovery information comprises at least one of:
first information configured to identify first terminal group information;
second information indicating that the second terminal needs to be in the first terminal group;
third information indicating that the first terminal and the second terminal need to be in the same terminal group; or
fourth information indicating that the first terminal and the second terminal need to be in the first terminal group.

4. The method according to any one of claims 1 to 3, further comprising:
determining a candidate terminal list according to the group discovery information, wherein the candidate terminal list comprises at least one candidate terminal, and the second terminal belongs to the at least one candidate terminal; and
transmitting the candidate terminal list to the first terminal.

5. The method according to any one of claims 1 to 4, further comprising:
receiving first information transmitted by a second network element, wherein the first information indicates the group discovery information.

6. The method according to any one of claims 1 to 5, further comprising:
receiving second information transmitted by the first terminal, wherein the second information indicates positioning assistance data, and the positioning assistance data is reference data for performing ranging or positioning on the first terminal;
determining a positioning result of the second terminal; and
determining a ranging result of the first terminal relative to the second terminal or a positioning result of the first terminal according to the positioning assistance data and the positioning result of the second terminal.

7. The method according to claim 6, further comprising:
transmitting the ranging result of the first terminal relative to the second terminal or the positioning result of the first terminal to a second network element, wherein the ranging result of the first terminal relative to the second terminal or the positioning result of the first terminal is forwarded by the second network element to a third network element and/or a location service client.

8. The method according to any one of claims 1 to 5, further comprising:
receiving information of the second terminal transmitted by the first terminal; and
performing ranging or positioning on the first terminal according to the information of the second terminal.

9. A ranging or positioning method, comprising:
receiving group discovery information transmitted by a first network element, wherein the group discovery information indicates that a second terminal belongs to a first terminal group, and the second terminal is used for ranging or positioning of a first terminal.

10. The method according to claim 9, wherein the group discovery information is further configured to identify the first terminal group, and/or the group discovery information indicates that the first terminal belongs to the first terminal group.

11. The method according to any one of claims 9 to 10, wherein the group discovery information comprises at least one of:
first information configured to identify first terminal group information;
second information indicating that the second terminal needs to be in the first terminal group;
third information indicating that the first terminal and the second terminal need to be in the same terminal group; or
fourth information indicating that the first terminal and the second terminal need to be in the first terminal group.

12. The method according to any one of claims 9 to 11, further comprising:
discovering the second terminal according to the group discovery information.

13. The method according to claim 12, wherein discovering the second terminal according to the group discovery information comprises:
determining at least one candidate terminal according to the group discovery information; and
selecting the second terminal from the at least one candidate terminal.

14. The method according to claim 12, wherein discovering the second terminal according to the group discovery information comprises:
determining at least one candidate terminal according to reference information, and selecting the second terminal from the at least one candidate terminal according to the group discovery information, wherein the reference information comprises at least one of: quality of service (QoS) required for positioning or terminal preference;
or
discovering at least one candidate terminal in the first terminal group according to the group discovery information; and
selecting a candidate terminal having target information as the second terminal from the at least one candidate terminal, wherein the target information at least comprises information describing a positioning capability.

15. The method according to any one of claims 9 to 11, further comprising:
receiving a candidate terminal list transmitted by the first network element, wherein the candidate terminal list is determined by the group discovery information, and the candidate terminal list comprises at least one candidate terminal; and
determining the second terminal from the at least one candidate terminal.

16. The method according to any one of claims 9 to 15, further comprising:
transmitting second information to the first network element, wherein the second information indicates positioning assistance data, the positioning assistance data is reference data for performing ranging or positioning on the first terminal, and the positioning assistance data and a positioning result of the second terminal are used for ranging or positioning the first terminal to obtain a ranging result of the first terminal relative to the second terminal or a positioning result of the first terminal.

17. The method according to any one of claims 9 to 15, further comprising:
transmitting information of the second terminal to the first network element, wherein the first network element performs ranging or positioning on the first terminal according to the information of the second terminal.

18. A ranging or positioning method, comprising:
receiving group discovery information transmitted by a third network element and/or a location service client, wherein the group discovery information indicates that a second terminal belongs to a first terminal group, and the second terminal is used for ranging or positioning of a first terminal.

19. The method according to claim 18, wherein the group discovery information is further configured to identify the first terminal group, and/or the group discovery information indicates that the first terminal belongs to the first terminal group.

20. The method according to any one of claims 18 to 19, wherein the group discovery information comprises at least one of:
first information configured to identify first terminal group information;
second information indicating that the second terminal needs to be in the first terminal group;
third information indicating that the first terminal and the second terminal need to be in the same terminal group; or
fourth information indicating that the first terminal and the second terminal need to be in the first terminal group.

21. The method according to any one of claims 18 to 20, further comprising:
transmitting first information to a first network element, wherein the first information indicates the group discovery information.

22. The method according to any one of claims 18 to 21, further comprising:
receiving a ranging result of the first terminal relative to the second terminal or a positioning result of the first terminal transmitted by a first network element.

23. The method according to any one of claims 18 to 22, further comprising:
transmitting a ranging result of the first terminal relative to the second terminal or a positioning result of the first terminal to the third network element and/or the location service client.

24. A ranging or positioning method, comprising:
transmitting group discovery information to a second network element, wherein the group discovery information indicates that a second terminal belongs to a first terminal group, and the second terminal is used for ranging or positioning of a first terminal.

25. The method according to claim 24, wherein the group discovery information is further configured to identify the first terminal group, and/or the group discovery information indicates that the first terminal belongs to the first terminal group.

26. The method according to any one of claims 24 to 25, wherein the group discovery information comprises at least one of:
first information configured to identify first terminal group information;
second information indicating that the second terminal needs to be in the first terminal group;
third information indicating that the first terminal and the second terminal need to be in the same terminal group; or
fourth information indicating that the first terminal and the second terminal need to be in the first terminal group.

27. The method according to any one of claims 24 to 26, further comprising:
receiving a ranging result of the first terminal relative to the second terminal or a positioning result of the first terminal transmitted by the second network element.

28. A ranging or positioning apparatus, comprising:
a transceiver module configured to:
transmit group discovery information to a first terminal, wherein the group discovery information indicates that a second terminal belongs to a first terminal group, and the second terminal is used for ranging or positioning of the first terminal; or
receive group discovery information transmitted by a first network element, wherein the group discovery information indicates that a second terminal belongs to a first terminal group, and the second terminal is used for ranging or positioning of a first terminal; or
receive group discovery information transmitted by a third network element and/or a location service client, wherein the group discovery information indicates that a second terminal belongs to a first terminal group, and the second terminal is used for ranging or positioning of a first terminal; or
transmit group discovery information to a second network element, wherein the group discovery information indicates that a second terminal belongs to a first terminal group, and the second terminal is used for ranging or positioning of a first terminal.

29. A communication device, comprising:
one or more processors,
wherein the one or more processors are configured to call instructions to cause the communication device to perform the method according to any one of claims 1 to 27.

30. A communication system, comprising a first network element, a first terminal, a second network element, and a third network element and/or a location service client, wherein the first network element is configured to perform the method according to any one of claims 1 to 8; the first terminal is configured to perform the method according to any one of claims 9 to 17; the second network element is configured to perform the method according to any one of claims 18 to 23; and the third network element and/or the location service client is configured to perform the method according to any one of claims 24 to 27.

31. A storage medium storing instructions, wherein the instructions, when run on a communication device, are configured to cause the communication device to perform the method according to any one of claims 1 to 27.

## Amended claims

### Amended claims under Art. 19.1 PCT

1. A ranging or positioning method, comprising:
transmitting (S2104, S2202, S3101, S3202) group discovery information to a first terminal, wherein the group discovery information indicates that a second terminal belongs to a first terminal group, and the second terminal is used for ranging or positioning of the first terminal.

2. The method according to claim 1, wherein the group discovery information is further configured to identify the first terminal group, and/or the group discovery information indicates that the first terminal belongs to the first terminal group; and/or
wherein the group discovery information comprises at least one of:
first information configured to identify first terminal group information;
second information indicating that the second terminal needs to be in the first terminal group;
third information indicating that the first terminal and the second terminal need to be in the same terminal group; or
fourth information indicating that the first terminal and the second terminal need to be in the first terminal group.

3. The method according to any one of claims 1 to 2, further comprising:
determining (S3302) a candidate terminal list according to the group discovery information, wherein the candidate terminal list comprises at least one candidate terminal, and the second terminal belongs to the at least one candidate terminal; and
transmitting (S3303) the candidate terminal list to the first terminal,
and/or
further comprising:
receiving (S2103, S3201, S3301) the group discovery information transmitted by a second network element.

4. The method according to any one of claims 1 to 3, further comprising:
receiving (S2108, S2206, S3203, S3304) positioning assistance data transmitted by the first terminal, wherein the positioning assistance data is reference data for performing ranging or positioning on the first terminal;
determining (S2108, S2207, S3305) a positioning result of the second terminal; and
determining (S2108, S2208, S3204, S3306) a ranging result of the first terminal relative to the second terminal or a positioning result of the first terminal according to the positioning assistance data and the positioning result of the second terminal,
optionally, the method further comprises:
transmitting (S2109, S2209, S3205, S3307) the ranging result of the first terminal relative to the second terminal or the positioning result of the first terminal to a second network element, wherein the ranging result of the first terminal relative to the second terminal or the positioning result of the first terminal is forwarded by the second network element to at least one of a third network element or a location service client.

5. The method according to any one of claims 1 to 3, further comprising:
receiving information of the second terminal transmitted by the first terminal; and
performing ranging or positioning on the first terminal according to the information of the second terminal.

6. A ranging or positioning method, comprising:
receiving (S2105, S2203, S4101, S4201, S4301) group discovery information transmitted by a first network element, wherein the group discovery information indicates that a second terminal belongs to a first terminal group, and the second terminal is used for ranging or positioning of a first terminal.

7. The method according to claim 6, wherein the group discovery information is further configured to identify the first terminal group, and/or the group discovery information indicates that the first terminal belongs to the first terminal group; and/or
wherein the group discovery information comprises at least one of:
first information configured to identify first terminal group information;
second information indicating that the second terminal needs to be in the first terminal group;
third information indicating that the first terminal and the second terminal need to be in the same terminal group; or
fourth information indicating that the first terminal and the second terminal need to be in the first terminal group.

8. The method according to any one of claims 6 to 7, further comprising:
discovering (S2106, S2204, S4202) the second terminal according to the group discovery information,
optionally, discovering the second terminal according to the group discovery information comprises:
determining at least one candidate terminal according to the group discovery information; and
selecting the second terminal from the at least one candidate terminal.

9. The method according to any one of claims 6 to 7, further comprising:
discovering the second terminal according to the group discovery information,
optionally, discovering the second terminal according to the group discovery information comprises:
determining at least one candidate terminal according to reference information, and selecting the second terminal from the at least one candidate terminal according to the group discovery information, wherein the reference information comprises at least one of: quality of service, QoS, required for positioning or terminal preference;
or
discovering at least one candidate terminal in the first terminal group according to the group discovery information; and
selecting a candidate terminal having target information as the second terminal from the at least one candidate terminal, wherein the target information at least comprises information describing a positioning capability.

10. The method according to any one of claims 6 to 7, further comprising:
receiving (S4302) a candidate terminal list transmitted by the first network element, wherein the candidate terminal list is determined by the group discovery information, and the candidate terminal list comprises at least one candidate terminal; and
determining (S4303) the second terminal from the at least one candidate terminal.

11. The method according to any one of claims 6 to 10, further comprising:
transmitting (S2107, S2205, S4304) positioning assistance data to the first network element, wherein the positioning assistance data is reference data for performing ranging or positioning on the first terminal, and the positioning assistance data and a positioning result of the second terminal are used for ranging or positioning the first terminal to obtain a ranging result of the first terminal relative to the second terminal or a positioning result of the first terminal; or
transmitting information of the second terminal to the first network element, wherein the first network element performs ranging or positioning on the first terminal according to the information of the second terminal.

12. A ranging or positioning method, comprising:
receiving (S2101, S5101, S5201) group discovery information transmitted by a third network element and/or a location service client, wherein the group discovery information indicates that a second terminal belongs to a first terminal group, and the second terminal is used for ranging or positioning of a first terminal.

13. The method according to claim 12, wherein the group discovery information is further configured to identify the first terminal group, and/or the group discovery information indicates that the first terminal belongs to the first terminal group; and/or
wherein the group discovery information comprises at least one of:
first information configured to identify first terminal group information;
second information indicating that the second terminal needs to be in the first terminal group;
third information indicating that the first terminal and the second terminal need to be in the same terminal group; or
fourth information indicating that the first terminal and the second terminal need to be in the first terminal group.

14. The method according to any one of claims 12 to 13, further comprising:
transmitting (S2102, S5202) the group discovery information to a first network element, optionally, the method further comprises receiving (S5203) a ranging result of the first terminal relative to the second terminal or a positioning result of the first terminal transmitted by a first network element, and
optionally, the method further comprises transmitting (S5204) the ranging result of the first terminal relative to the second terminal or the positioning result of the first terminal to the at least one of the third network element or the location service client.

15. A communication device (9100), comprising:
one or more processors (9101),
wherein the one or more processors (9101) are configured to call instructions to cause the communication device (9100) to perform the method according to any one of claims 1 to 14.
